# EUROPÄISCHE PATENTSCHRIFT

(11) **EP 4 238 427 B1**
(45) Veröffentlichungstag und Bekanntmachung des Hinweises auf die Patenterteilung: **02.09.2026**
(21) Anmeldenummer: 23158703.1
(22) Anmeldetag: 27.02.2023
(51) Int. Cl.: A23P 30/00, A23J 3/22, A23J 3/26, A23P 30/20

(54) **AUSTRAGSVORRICHTUNG UND VERFAHREN ZUR TEXTURIERUNG EINER LEBENSMITTELZUSAMMENSETZUNG SOWIE ANLAGE ZUR HERSTELLUNG EINER LEBENSMITTELZUSAMMENSETZUNG**
DISCHARGE DEVICE AND METHOD FOR TEXTURIZING A FOOD COMPOSITION AND PLANT FOR PRODUCING A FOOD COMPOSITION
DISPOSITIF DE DISTRIBUTION ET PROCÉDÉ DE TEXTURATION D'UNE COMPOSITION ALIMENTAIRE ET INSTALLATION DE PRODUCTION D'UNE COMPOSITION ALIMENTAIRE

(30) Priorität: 01.03.2022 DE 102022202087
(43) Veröffentlichungstag der Anmeldung: 06.09.2023
(73) Patentinhaber: Coperion GmbH, 70469 Stuttgart (DE)
(72) Erfinder: Hüttner, Christian, 73773 Aichwald (DE); Kühnen, Uta, 70191 Stuttgart (DE); Specht, Fabian, 70439 Stuttgart (DE); Marinova, Svetlana, 70597 Stuttgart (DE); Huber, Stefan, 71292 Friolzheim (DE)
(74) Vertreter: Rau, Schneck & Hübner Patentanwälte Rechtsanwälte PartGmbB

(56) Entgegenhaltungen:
- WO-A1-2021/136816
- WO-A1-91/04677
- DE-A1- 2 758 224
- DE-T2- 69 419 348
- US-A- 4 062 987

## Beschreibung

Die vorliegende Erfindung betrifft eine Anlage zur Herstellung einer Lebensmittelzusammensetzung, insbesondere einer Fleischersatz-Zusammensetzung, mit einer Austragsvorrichtung zur Texturierung einer Lebensmittelzusammensetzung. Die Erfindung betrifft zudem ein Verfahren zur Herstellung einer Lebensmittelzusammensetzung, insbesondere einer Fleischersatz-Zusammensetzung.

Die Textur eines Lebensmittels bestimmt das Geschmacks- und Genussempfinden beim Verzehr des Lebensmittels wesentlich mit. Bei der industriellen Herstellung von Ersatzprodukten wird daher versucht eine Lebensmittelzusammensetzung derart zu texturieren, dass deren Textur der Textur des zu ersetzenden Lebensmittels möglichst nahekommt. Insbesondere bei der Produktion von Fleischersatz-Produkten wird versucht, das Biss- und Kauverhalten von Fleisch nachzuahmen. Beispielsweise werden Fleischersatz-Zusammensetzungen einer sogenannten Nasstexturierung unterzogen, bei der sich faserartige Strukturen ausbilden. Die Nasstexturierung kann kontinuierlich oder im Batch-Verfahren erfolgen. Für die kontinuierliche Texturierung werden beispielsweise Kühldüsen verwendet, über die eine extrudierte Lebensmittelzusammensetzung gekühlt und in ihrer Expansion gehindert wird. Nachteilig hieran ist die starke Abhängigkeit der entstehenden Faserstruktur von den konkreten Prozessparametern, die eine Skalierung des Prozesses erschwert.

Die DE 27 58 224 A1 offenbart ein Verfahren zur Herstellung von faserförmigen oder granulierten Nahrungs- und Futtermitteln. Die US 4,062,987 offenbart eine Proteintexturierung mittels einer Spinndüse. Die WO 2021/136816 A1 beschreibt ein Verfahren zur Herstellung eines Fleischersatzprodukts und ein Extrusionswerkzeug hierfür.

Es ist eine Aufgabe der vorliegenden Erfindung, eine Anlage zur Herstellung von Lebensmittelzusammensetzungen, insbesondere von Fleischersatz-Zusammensetzungen, zu verbessern. Insbesondere soll eine Austragsvorrichtung der Anlage zur kontinuierlichen Texturierung einer Lebensmittelzusammensetzung verbessert werden, die insbesondere eine genaue und präzise Einstellung der Texturierung ermöglicht und die skalierbar ist.

Diese Aufgabe ist gelöst durch eine Anlage mit den in Anspruch 1 angegeben Merkmalen. Die Anlage weist mindestens eine Aufbereitungsvorrichtung zum kontinuierlichen Aufbereiten der Lebensmittelzusammensetzung und eine Austragsvorrichtung zum Texturieren der Lebensmittelzusammensetzung auf. Mindestens eine Austrittsöffnung der mindestens einen Aufbereitungsvorrichtung ist mit der mindestens einen Zuführöffnung der Austragsvorrichtung verbunden, insbesondere in Fluidverbindung.

Die Verbindung der mindestens einen Austrittsöffnung mit der Austragsvorrichtung erfolgt beispielsweise über mindestens eine Zuführleitung der Austragsvorrichtung.

Die Anlage kann insbesondere mehrere Aufbereitungsvorrichtungen zum kontinuierlichen Aufbereiten der Lebensmittelzusammensetzung aufweisen. Beispielsweise können verschiedene Bestandteile der Lebensmittelzusammensetzung parallel aufbereitet werden und gemeinsam der Austragsvorrichtung zugeführt werden. Beispielsweise ist eine Koextrusion unterschiedlicher Bestandteile der Lebensmittelzusammensetzung möglich.

Die mindestens eine Aufbereitungsvorrichtung weist insbesondere einen Extruder, vorzugsweise einen Mehrwellenextruder, bevorzugt einen Doppelschneckenextruder auf. Extruder, insbesondere Doppelschneckenextruder, haben sich für die kontinuierliche Aufbereitung von Lebensmittelzusammensetzungen, insbesondere Fleischersatz-Zusammensetzungen, bewährt.

Die Austragsvorrichtung weist ein erstes Begrenzungselement mit einer ersten Texturieroberfläche und ein zweites Begrenzungselement mit einer zweiten Texturieroberfläche auf. Zwischen der ersten Texturieroberfläche und der zweiten Texturieroberfläche ist ein Spalt gebildet. Die Austragsvorrichtung weist zudem mindestens eine Zuführöffnung zum kontinuierlichen Zuführen der Lebensmittelzusammensetzung in den Spalt und mindestens eine Austragsöffnung zum kontinuierlichen Austragen der Lebensmittelzusammensetzung aus dem Spalt auf. Das erste Begrenzungselement und das zweite Begrenzungselement sind relativ zueinander um eine Rotationsachse drehantreibbar. Die erste Texturieroberfläche und die zweite Texturieroberfläche erstrecken sich jeweils zwischen der mindestens einen Zuführöffnung und der mindestens einen Austragsöffnung radial zur Rotationsachse. Die kontinuierlich über die mindestens eine Zuführöffnung zugeführte Lebensmittelzusammensetzung wird kontinuierlich durch den Spalt zu der mindestens einen Austragsöffnung geleitet. Die Lebensmittelzusammensetzung interagiert mit den Texturieroberflächen, sodass ein Geschwindigkeitsprofil entsteht. Aufgrund des Durchtritts der Lebensmittelzusammensetzung durch den Spalt wirkt somit eine erste Scherkraft auf die Lebensmittelzusammensetzung ein. Durch den relativen Drehantrieb der Begrenzungselemente wird eine weitere zweite Scherkraft auf die Lebensmittelzusammensetzung ausgeübt. Da sich die Texturieroberflächen von der mindestens einen Zuführöffnung zu der mindestens einen Austragsöffnung radial zu der Rotationsachse erstrecken, wirken die erste Scherkraft und die zweite Scherkraft in unterschiedlichen Richtungen. Die erste Scherkraft wirkt insbesondere in einer radialen Richtung, wohingegen die zweite Scherkraft insbesondere in einer Umfangsrichtung wirkt. Die zweite Scherkraft kann kontrolliert und unabhängig von der ersten Scherkraft erzeugt werden. Insbesondere die durch die relative Drehbewegung der Begrenzungselemente erzeugte Scherkraft ist einfach und kontrolliert an den jeweiligen Anwendungsfall anpassbar. Die erzeugte Scherkraft ist insbesondere unabhängig von einem Produktdurchsatz präzise einstellbar, beispielsweise durch eine Variation der Drehzahl und/oder eines Spaltmaßes des Spalts. Die Austragsvorrichtung ist flexibel einsetzbar und skalierbar.

Die mindestens eine Austragsöffnung hat einen größeren Abstand zu der Rotationsachse als die mindestens eine Zuführöffnung. Eine derartige Austragsvorrichtung ist effizient und besonders zur Texturierung einer Lebensmittelzusammensetzung geeignet. Die über die mindestens eine Zuführöffnung in den Spalt eingebrachte Lebensmittelzusammensetzung durchläuft den Spalt in radialer Richtung nach außen. Der in dem Spalt für die Lebensmittelzusammensetzung zur Verfügung stehende Raum nimmt daher von der mindestens einen Zuführöffnung zu der mindestens einen Austragsöffnung zu. Dies fördert die Expansion der Lebensmittelzusammensetzung, was deren Textur auflockert.

Ein größerer Abstand der mindestens einen Austragsöffnung zu der Rotationsachse hat zudem den Vorteil, dass eine aufgrund der Relativdrehung der Begrenzungselemente entstehenden Fliehkraft die Expansion der Lebensmittelzusammensetzung in Richtung der mindestens einen Austragsöffnung fördert. Durch die Rotationsgeschwindigkeit kann daher die Expansion der Lebensmittelzusammensetzung gezielt beeinflusst werden. Mit zunehmender Drehzahl kann insbesondere der Druck im Bereich der mindestens einen Zuführöffnung reduziert werden. Dies begünstigt die Entstehung von Dampfblasen, die zu einer weiteren Auflockerung der Textur beitragen können.

Die mindestens eine Austragsöffnung zum Austragen der Lebensmittelzusammensetzung ist in Richtung radial zu der Rotationsachse ausgebildet. Eine derartige Austragsvorrichtung ist konstruktiv einfach und effizient. Die Austragsrichtung entspricht im Wesentlichen der Richtung, in welcher die Lebensmittelzusammensetzung den Spalt durchtritt. Eine Umlenkung der Lebensmittelzusammensetzung im Bereich der mindestens einen Austragsöffnung ist vorteilhafterweise vermieden. Eine in der Lebensmittelzusammensetzung erzeugte Textur, insbesondere eine Faserstruktur, wird durch den Austrag durch die mindestens eine Austragsöffnung nicht beeinflusst, insbesondere nicht beschädigt. Ein Aufstauen im Bereich der mindestens einen Austragsöffnung ist vermieden.

Ein weiterer Vorteil der Anlage mit der Austragsvorrichtung besteht darin, dass die Scherkraft lokal einstellbar, insbesondere variierbar ist. Bei relativem Drehantrieb der Begrenzungselemente nimmt die relative Oberflächengeschwindigkeit der Texturieroberflächen mit zunehmendem Abstand zu der Rotationsachse zu. Dies kann dazu genutzt werden, die Scherung positionsabhängig zu verändern, insbesondere zu erhöhen. Beispielsweise ist bei gleichbleibendem Spaltmaß eine mit radialem Abstand von der Rotationsachse zunehmende Scherkraft erzeugbar. Zusätzlich oder alternativ kann ein Spaltmaß abhängig vom Abstand zu der Rotationsachse sein, um einer Erhöhung der Scherkräfte durch die vergrößerte Oberflächengeschwindigkeit entgegenzuwirken oder die Scherkräfte weiter zu erhöhen. Vorteilshafterweise sind hierdurch besonders hohe Scherkräfte und/oder homogene Scherkräfte erzeugbar. Die Austragsvorrichtung erlaubt einen flexibel und einfach skalierbaren Texturierungsprozess.

Bevorzugt verläuft die Rotationsachse in Schwerkraftrichtung. Die Schwerkraft beeinflusst den Durchtritt der Lebensmittelzusammensetzung durch den Spalt in Richtung senkrecht zu der Rotationsachse nicht. Die Texturierung ist homogen und präzise kontrollierbar.

Die Austragsvorrichtung eignet sich zur Texturierung beliebiger Lebensmittelzusammensetzungen. Besonders geeignet ist die Austragsvorrichtung zur Texturierung von Fleischersatz-Zusammensetzungen. Die präzise einstellbare Scherkraft erlaubt eine definierte Erzeugung von Faserstrukturen. Die Fleischersatz-Zusammensetzung kann beispielsweise eine Proteinschmelze, insbesondere ein sogenanntes High Moisture Meat Analogue (HMMA) sein. Eine Fleischersatz-Zusammensetzung kann beispielsweise Wasser, pflanzliche Proteine, insbesondere Sojaproteine und/oder Weizenproteine, Bindemittel, insbesondere Stärke und/oder Mehl, pflanzliche Öle und/oder pflanzliche Fette und/oder Geschmacksstoffe aufweisen. Beispielhafte Fleischersatz-Zusammensetzungen in Form von HMMA und deren Aufbereitung sind in EP 3 270 716 B1 beschrieben.

Die Texturieroberflächen der beiden Begrenzungselemente sind bevorzugt in Richtung der Rotationsachse beabstandet. Eine Ausdehnung der Texturieroberflächen in Richtung senkrecht zu der Rotationsachse, insbesondere ein Durchmesser der Texturieroberflächen senkrecht zu der Rotationsachse ist einfach und flexibel anpassbar. Ein Spaltmaß des durch die Beabstandung der Texturieroberflächen in Richtung der Rotationsachse gebildeten Spalts ist einfach und flexibel anpassbar. Eine Expansion der in den Spalt zugeführten Lebensmittelzusammensetzung ist präzise und flexibel einstellbar. Die Austragsvorrichtung ist einfach skalierbar.

Ein Spaltmaß des Spalts, insbesondere in Richtung der Rotationsachse, kann beispielsweise zwischen 5 mm und 20 mm, insbesondere zwischen 8 mm und 15 mm, beispielsweise ca. 10 mm betragen. Das Spaltmaß ist bevorzugt variierbar.

Die erste Texturieroberfläche und die zweite Texturieroberfläche erstrecken sich jeweils zwischen der mindestens einen Zuführöffnung und der mindestens einen Austragsöffnung radial zur Rotationsachse. Bevorzugt erstrecken sich die erste Texturieroberfläche und die zweite Texturieroberfläche stetig entlang der Rotationsachse. Der Materialführung abträgliche Richtungswechsel, insbesondere Kanten sind vermieden. Durch die stetige Erstreckung in radialer Richtung kann der Vorteil der einstellbaren Scherkräfte in besonders hohem Maße verwirklicht werden.

Die Austragsvorrichtung weist mindestens eine Zuführöffnung auf. Die mindestens eine Zuführöffnung ist bevorzugt konzentrisch zu der Rotationsachse ausgebildet bzw. angeordnet. Beispielsweise kann eine einzelne Zuführöffnung im Bereich der Rotationsachse ausgebildet sein. Die Zuführöffnung kann beispielsweise einen kreisförmigen Querschnitt haben.

Ein Durchmesser der Zuführöffnung kann beispielsweise zwischen 15 mm und 80 mm, insbesondere zwischen 17,5 mm und 50 mm, beispielsweise etwa 20 mm betragen.

Die Austragsvorrichtung weist eine oder mehrere Austragsöffnungen auf. Bevorzugt ist die mindestens eine Austragsöffnung konzentrisch zu der Rotationsachse ausgebildet bzw. angeordnet und/oder ringförmig und/oder ringabschnittförmig ausgebildet.

Das erste Begrenzungselement und das zweite Begrenzungselement sind relativ zueinander drehantreibbar, bevorzugt mit variierbarer Drehrichtung und Drehzahl. Besonders bevorzugt wird nur eines der zwei Begrenzungselemente angetrieben, während das andere feststehend ist. Der Aufbau der Austragsvorrichtung ist konstruktiv einfach und zuverlässig.

Das erste Begrenzungselement und/oder das zweite Begrenzungselement sind bevorzugt bezüglich der Rotationsachse rotationssymmetrisch ausgebildet. Eine Rotationssymmetrie des ersten Begrenzungselements und/oder des zweiten Begrenzungselements kann eine diskrete Rotationssymmetrie oder eine kontinuierliche Rotationssymmetrie sein. Die Texturierung der Lebensmittelzusammensetzung ist homogen. Ein Energieaufwand zum relativen Drehantrieb der Begrenzungselemente ist gering.

Besonders bevorzugt sind das erste Begrenzungselement und/oder das zweite Begrenzungselement im Wesentlichen als Rotationskörper um die Rotationsachse ausgebildet. Beispielsweise kann das erste Begrenzungselement und/oder das zweite Begrenzungselement als kreisförmige Platte und/oder Konus um die Rotationsachse ausgebildet sein.

Eine Anlage gemäß Anspruch 2 ist besonders flexibel und einfach skalierbar. Der Winkel b, unter dem die erste Texturieroberfläche und/oder die zweite Texturieroberfläche zu der Rotationsachse verlaufen, ist der Winkel, den eine Oberflächentangente der jeweiligen Texturieroberfläche mit der Rotationsachse einschließt. Ein Winkel b von 45° bedeutet beispielsweise, dass die jeweilige Texturieroberfläche mit der Rotationsachse einen Winkel von 45° einschließt. Bei einem Winkel b von mindestens 45° erstrecken sich die Texturieroberflächen im Wesentlichen in radialer Richtung. Die Vorteile von sich in radialer Richtung erstreckenden Texturieroberflächen sind in besonderem Maße gegeben, insbesondere kann die mittels der Relativdrehung der Begrenzungselemente erzeugte Scherkraft in einem großen Bereich variiert werden. Beispielsweise kann der Winkel b etwa 90° betragen. Die Texturieroberfläche verläuft im Wesentlichen in einer Normalenebene der Rotationsachse.

Der Winkel b, unter welchem die erste Texturieroberfläche und/oder die zweite Texturieroberfläche zu der Rotationsachse verlaufen, ist bevorzugt unabhängig von einer um die Rotationsachse definierten Winkelkoordinate. Der Winkel b kann beispielsweise in allen Richtungen senkrecht zu der Rotationsachse gleich sein. Der Winkel b kann insbesondere über die gesamte erste Texturieroberfläche und/oder über die gesamte zweite Texturieroberfläche im Wesentlichen konstant sein.

Bevorzugt sind das erste Begrenzungselement und/oder das zweite Begrenzungselement im Wesentlichen als Rotationskörper um die Rotationsachse ausgebildet. Die erste Texturieroberfläche und/oder die zweite Texturieroberfläche verläuft in allen Richtungen senkrecht zu der Rotationsachse im Wesentlichen unter dem gleichen Winkel b zu der Rotationsachse.

Beispielsweise erstrecken sich die erste Texturieroberfläche und/oder die zweite Texturieroberfläche im Wesentlichen in einer Normalenebene der Rotationsachse. Die erste Texturieroberfläche und/oder die zweite Texturieroberfläche können insbesondere senkrecht, insbesondere radial zu der Rotationsachse verlaufen. Beispielsweise kann die erste Texturieroberfläche und/oder die zweite Texturieroberfläche im Wesentlichen eine konzentrisch zu der Rotationsachse angeordnete Kreisform aufweisen. Das erste Begrenzungselement und/oder das zweite Begrenzungselement kann entsprechend als Platte ausgebildet sein, insbesondere als Kreisplatte.

Eine Anlage nach Anspruch 3 ist konstruktiv einfach und ermöglicht eine präzise Einstellung des Spaltmaßes der Austragsvorrichtung. Bevorzugt kann die Einstellung des Spaltmaßes durch vertikale Zustellung des einen Begrenzungselements relativ zu dem anderen Begrenzungselement erfolgen.

Parallel verlaufende Texturieroberflächen weisen insbesondere ein konstantes Spaltmaß auf. Die durch relativen Drehantrieb der Begrenzungselemente erzeugte Scherkraft nimmt mit zunehmenden radialem Abstand von der Rotationsachse zu. Die parallel verlaufende Texturieroberflächen haben daher insbesondere den Vorteil einer einfach und effektiv variierbaren Scherkraft zur Texturierung der Lebensmittelzusammensetzung.

Beispielsweise können die erste Texturieroberfläche und die zweite Texturieroberfläche im Wesentlichen eben ausgebildet sein. Insbesondere sind die erste Texturieroberfläche und die zweite Texturieroberfläche senkrecht zu der Rotationsachse ausgebildet. Die Begrenzungselemente können beispielsweise jeweils als Platten, insbesondere als Kreisplatten, ausgeführt sein.

Eine Anlage gemäß Anspruch 4 erlaubt eine besonders flexible Einstellung der Scherkräfte. Das variierende Spaltmaß beeinflusst die auf die Lebensmittelzusammensetzung wirkenden Scherkräfte. Hierdurch kann beispielsweise eine Erhöhung der Scherkräfte aufgrund des größeren radialen Abstands ausgeglichen oder verstärkt werden.

Insbesondere erhöht sich das Spaltmaß mit zunehmenden Abstand von der Rotationsachse. Hierdurch kann einer Erhöhung der Scherkräfte aufgrund der höheren Oberflächengeschwindigkeit bei größerem Radius entgegengewirkt werden. Beispielsweise erhöht sich das Spaltmaß derart, dass die auf die Lebensmittelzusammensetzung wirkenden Scherkräfte unabhängig von dem Abstand zu der Rotationsachse sind. Dies ermöglicht eine homogene Einwirkung der Scherkräfte.

Ein variierendes Spaltmaß, insbesondere ein mit Abstand zu der Rotationsachse zunehmendes Spaltmaß, ermöglicht zudem eine gezielte Beeinflussung der Verteilung der Lebensmittelzusammensetzung in dem Spalt. Beispielsweise kann das Spaltmaß im Bereich der mindestens einen Zuführöffnung reduziert sein, um einen Gegendruck zu erzeugen. Hierdurch kann die Lebensmittelzusammensetzung gezielt in die Bereiche größeren Spaltma-βes geleitet werden. Dies begünstigt eine homogene Verteilung und Texturierung der Lebensmittelzusammensetzung.

Beispielsweise kann mindestens eines der Begrenzungselemente konisch ausgebildet sein. Die entsprechende Texturieroberfläche entspricht der Mantelfläche des Konus. Beispielsweise kann eines der Begrenzungselemente als Konus ausgebildet sein. Das andere Begrenzungselement kann als Platte und/oder Konus ausgebildet sein. Für den Fall, dass beide Begrenzungselemente als Konus ausgebildet sind, können diese in Richtung der Rotationsachse gleich oder entgegengesetzt ausgerichtet sein.

Eine Anlage gemäß Anspruch 5 weist eine konstruktiv einfache Austragsvorrichtung auf. Beispielsweise kann der zwischen den Texturieroberflächen gebildete Spalt umfangseitig angeordnete Öffnungen aufweisen, insbesondere umfangseitig offen sein. Die umfangseitig ausgebildete Austragsöffnung kann auch durch ein umfangseitig angeordnetes Verschlusselement abgedeckt sein. In dem Verschlusselement können eine oder mehrere Öffnungen zum Austrag der Lebensmittelzusammensetzung gebildet sein. Hierdurch ist insbesondere ein Austrag der Lebensmittelzusammensetzung an einem genau definierten Ort gewährleistet.

Eine Anlage gemäß Anspruch 6 ermöglicht ein einfaches Abtrennen und Portionieren der texturierten Lebensmittelzusammensetzung. Beispielsweise kann die mindestens eine Abstreifvorrichtung an einem der beiden Begrenzungselemente angeordnet sein, insbesondere an einem feststehenden Begrenzungselement. Dies ermöglicht ein Abtrennen der Lebensmittelzusammensetzung an einem genau definierten Ort. Dies ist insbesondere von Vorteil bei einer umfangseitig ausgebildeten Austragsöffnung.

Eine Anlage gemäß Anspruch 7 ist besonders vielseitig einsetzbar. Durch das mindestens eine im Spalt angeordnete Texturierwerkzeug ist die Produktform und Textur effektiv beeinflussbar. Beispielsweise kann ein Strom der Lebensmittelzusammensetzung gelenkt und/oder geteilt werden. Mithilfe des mindestens einen Texturierwerkzeugs kann alternativ oder zusätzlich ein weiteres Durchmischen der Lebensmittelzusammensetzung erfolgen. Das mindestens eine Texturierwerkzeug umfasst insbesondere Leitbleche, Vorsprünge, beispielsweise in Form von Stiften und/oder Kegeln, Rechen, Gitter, Filter und/oder Siebe.

Beispielsweise kann das mindestens eine Texturierwerkzeug Leitbleche aufweisen. Bevorzugt sind die Leitbleche spiralförmig um die mindestens eine Zuführöffnung, insbesondere spiralförmig um eine konzentrisch zu der Rotationsachse angeordnete Zuführöffnung, angeordnet. Mithilfe von Leitblechen, insbesondere spiralförmig angeordneten Leitblechen, ist die Produktform der auszutragenden Lebensmittelzusammensetzung gezielt beeinflussbar, insbesondere abhängig von der Drehrichtung beeinflussbar. Beispielsweise kann die Lebensmittelzusammensetzung bei Drehrichtung, die der Spiralrichtung der Leitbleche entspricht, in Stangenform gebracht werden. In entgegengesetzter Drehrichtung, also in Drehrichtung entgegen der Spiralrichtung der Leitbleche, führen die Leitbleche zu einer weiteren Zerkleinerung der Lebensmittelzusammensetzung. Es resultiert eine kleinteilige, insbesondere zerrissene, Struktur.

Zusätzlich oder alternativ kann das mindestens eine Texturierwerkzeug eine Verjüngung und/oder Aufweitung des Spalts bewirken. Beispielsweise kann das mindestens eine Texturierwerkzeug im Bereich der mindestens einen Zuführöffnung zu einer Verjüngung des Spalts führen. Durch die Verjüngung entsteht ein Gegendruck gegen die kontinuierlich eingebrachte Lebensmittelzusammensetzung. Durch den Gegendruck wird eine homogene Verteilung der Lebensmittelzusammensetzung in dem Spalt begünstigt. Beispielsweise kann das mindestens eine Texturierwerkzeug als der mindestens einen Zuführöffnung gegenüberliegende Erhebung, insbesondere als der mindestens einen Zuführöffnung gegenüberliegende konische Erhebung, ausgebildet sein.

Das mindestens eine Texturierwerkzeug kann alternativ oder zusätzlich auch Verschlussmittel zum bereichsweisen Verschließen der mindestens einen Austragsöffnung aufweisen. Hierdurch kann ein Gegendruck gegen die auszutragende Lebensmittelzusammensetzung erzeugt werden. Zudem kann durch das mindestens bereichsweise Verschließen der mindestens einen Austragsöffnung ein definierter Austrag der Lebensmittelzusammensetzung bewirkt werden. Geeignete Texturierwerkzeuge können beispielsweise Verschlusselemente, insbesondere Verschlussbleche, aufweisen.

Das mindestens eine Texturierwerkzeug kann an dem ersten Begrenzungselement und/oder dem zweiten Begrenzungselement angeordnet sein, insbesondere befestigt sein. Das mindestens eine Texturierwerkzeug kann insbesondere Teil mindestens eines Begrenzungselements sein. Beispielsweise kann das mindestens eine Texturierwerkzeug an einem Begrenzungselementgrundkörper mindestens eines der Begrenzungselemente befestigt oder befestigbar sein.

Die lösbare Anordnung des mindestens einen Texturierwerkzeugs an dem ersten Begrenzungselement und/oder dem zweiten Begrenzungselement erleichtert die Reinigung und Wartung der Austragsvorrichtung, insbesondere des mindestens einen Texturierwerkzeugs. Durch die lösbare Anordnung ist das mindestens eine Texturierwerkzeug zudem austauschbar. Je nach Anwendungsfall können daher unterschiedliche Texturierwerkzeuge eingesetzt werden.

Bevorzugt ist das mindestens eine Texturierwerkzeug als Einsatz in einem Begrenzungselementgrundkörper mindestens eines der beiden Begrenzungselemente einsetzbar.

Eine Anlage nach Anspruch 8 ist effizient und vielseitig einsetzbar. Durch die Temperiereinheit kann ein Temperieren, insbesondere ein Kühlen, der Lebensmittelzusammensetzung erfolgen. Eine separate, insbesondere nachträgliche, Kühlung der ausgetragenen und texturierten Lebensmittelzusammensetzung ist nicht nötig. Bevorzugt dient die Temperiereinheit zum Temperieren, insbesondere zum Kühlen, des ersten Begrenzungselements und des zweiten Begrenzungselements.

Mithilfe der Temperiereinheit ist insbesondere eine als Schmelze vorliegende Lebensmittelzusammensetzung, beispielsweise eine Proteinschmelze, während der Texturierung kühl- und aushärtbar.

Die Temperiereinheit weist bevorzugt Temperierkanäle für ein Temperiermedium, insbesondere ein Kühlmedium, in dem ersten Begrenzungselement und/oder dem zweiten Begrenzungselement auf. Bevorzugt ist das Temperiermedium, insbesondere das Kühlmedium, durch die Temperierkanäle in dem ersten Begrenzungselement und/oder dem zweiten Begrenzungselement förderbar. Hierdurch ist eine aktive Temperierung, insbesondere eine aktive Kühlung, der im Spalt befindlichen Lebensmittelzusammensetzung möglich. Die Temperiereinheit kann ein Reservoir für ein Temperiermedium, eine Temperiervorrichtung zum Temperieren des Temperiermediums und/oder eine Pumpe zum Fördern des Temperiermediums aufweisen. Alternativ ist auch möglich, dass die Temperiereinheit der Austragsvorrichtung Anschlüsse zum Zuführen und/oder Abführen eines Temperiermediums aufweist. Das Temperiermedium kann außerhalb der Austragsvorrichtung bereitgestellt werden, beispielsweise mittels eines externen Reservoirs, einer externen Temperiervorrichtung und/oder einer externen Pumpe.

Beispielsweise kann eine Zufuhr und Abfuhr des Temperiermediums über gefräste und/oder geschweißte Kanäle zu dem ersten Begrenzungselement und/oder dem zweiten Begrenzungselement realisiert sein. Dies ist insbesondere von Vorteil für ein feststehendes Begrenzungselement. Ein drehantreibbares Begrenzungselement kann entsprechend mit einer Zufuhr und Abfuhr für Temperiermedien ausgestattet sein, beispielsweise indem eine Drehdurchführung für den jeweiligen Zuführ- und Abführkanal vorgesehen ist.

Bevorzugt weisen beide Begrenzungselemente Temperierkanäle für das Temperiermedium, insbesondere das Kühlmedium, auf. Besonders bevorzugt sind die Temperierkanäle unterschiedlicher Begrenzungselemente getrennt voneinander. Beispielsweise kann ein Temperiermedium, insbesondere ein Kühlmedium, im Gegenstrom oder im Gleichstrom durch in den jeweiligen Begrenzungselementen ausgebildete Temperierkanäle gefördert werden. Dies ermöglicht eine einstellbare, insbesondere unabhängige Temperierung, insbesondere Kühlung, der Begrenzungselemente.

Geeignete Temperiermedien, insbesondere Kühlmedien können beispielsweise Wasser und/oder Glykole, insbesondere Propylen-Glykol und/oder Ethylen-Glykol, aufweisen. Das Temperiermedium kann beispielsweise auf eine Temperatur T temperiert werden, wobei gilt: 10°C ≤ T ≤ 100°C, insbesondere 15°C ≤ T ≤ 90°C, insbesondere 20°C ≤ T ≤ 70°C. Hierdurch ist eine schonende Kühlung einer insbesondere als Schmelze vorliegenden Lebensmittelzusammensetzung, beispielsweise einer Proteinschmelze, möglich. Ein zu schnelles Abkühlen und ein Risiko des Anklebens der Schmelze an den Texturieroberflächen ist verringert, insbesondere vermieden. Eine schonende Kühlung der Lebensmittelzusammensetzung ist zudem deren Textur zuträglich. Eine zu starke Kühlung schadet der Texturqualität, insbesondere kann durch zu starke Kühlung eine ungewollte bröselige Textur entstehen.

Die Temperiereinheit temperiert insbesondere einen Temperierbereich der ersten Texturieroberfläche und/oder der zweiten Texturieroberfläche, wobei der Temperierbereich eine Temperierfläche Ak aufweist, für die gilt: 40 cm²/(kg/h) ≤ Ak/m ≤ 1000 cm²/(kg/h), insbesondere 200 cm²/(kg/h) ≤ Ak/m ≤ 800·cm²/(kg/h), bevorzugt 300 cm²/(kg/h) ≤ Ak/m ≤ 600 cm²/(kg/h), wobei m der stündliche Durchsatz der Lebensmittelzusammensetzung in Kilogramm ist. Die Austragsvorrichtung ist besonders flexibel skalierbar. Die Temperierfläche Ak ist derart gewählt, dass eine schonende Temperierung unabhängig von den Produktdurchsätzen gewährleistet ist. Dies erhöht die Produktqualität und verringert den Ausschuss. Bevorzugt entspricht die Temperierfläche im Wesentlichen der ersten Texturieroberfläche und/oder der zweiten Texturieroberfläche. Dies ermöglicht einen platzsparenden Aufbau der Vorrichtung.

Eine Anlage gemäß Anspruch 9 ermöglicht eine besonders flexible und anwendungsspezifische Temperierung. Durch die unterschiedlichen Temperier-Teilbereiche können unterschiedliche Temperierzonen, insbesondere unterschiedliche Kühlzonen, definiert werden. Hierdurch ist ein Temperaturprofil auf der ersten Texturieroberfläche und/oder der zweiten Texturieroberfläche erzeugbar. Bevorzugt ist das Temperaturprofil in radialer Richtung ausgebildet, insbesondere in Richtung von der mindestens einen Zuführöffnung zu der mindestens einen Austragsöffnung. Beispielsweise kann das Temperaturprofil eine zunehmende Kühlung zwischen der mindestens einen Zuführöffnung und der mindestens einen Austragsöffnung bewirken. Dies gewährleistet eine zunehmende Kühlung und Aushärtung der Lebensmittelzusammensetzung, ohne dass diese an den Texturieroberflächen festklebt, insbesondere festfriert. Unterschiedliche Temperierzonen, insbesondere unterschiedliche Kühlzonen, können insbesondere einen unterschiedlichen radialen Abstand zu der Rotationsachse aufweisen.

Unterschiedliche Temperier-Teilbereiche können vorteilhafterweise auch zu einem abwechselnden Kühlen und Erwärmen der Lebensmittelzusammensetzung genutzt werden. Dies ermöglicht eine weitere Aufbereitung der Lebensmittelzusammensetzung während deren Texturierung.

Unterschiedliche Temperier-Teilbereiche können beispielsweise von einem Temperiermedium, insbesondere einem Kühlmedium, in Kreuzstrom, Gegenstrom oder Gleichstrom durchflossen werden. Es ist auch möglich, eine oder mehrere Temperierzonen im offenen Wasserbad zu kühlen.

Zur Ausbildung unterschiedlicher Temperier-Teilbereiche können diese beispielsweise verschiedene Anordnungen und/oder Geometrien von Temperierkanälen aufweisen. Beispielsweise können in unterschiedlichen Temperier-Teilbereichen Temperierkanäle unterschiedlichen Querschnitts angeordnet sein. Auf diese Weise kann unterschiedlich viel Temperiermedium durch die jeweiligen Temperierkanäle fließen, insbesondere umgepumpt werden. Es ist auch möglich, dass in unterschiedlichen Temperier-Teilbereichen die Temperierkanäle eine unterschiedliche Anordnung aufweisen. Beispielsweise kann ein Abstand zwischen Temperierkanälen in einem Temperier-Teilbereich größer sein als in einem anderen.

Eine Anlage gemäß Anspruch 10 ermöglicht eine effiziente Texturierung der Lebensmittelzusammensetzung in der Austragsvorrichtung. Durch die Oberflächenprofilierung, insbesondere die Riffelung, kann die Einwirkung der Scherkräfte auf die Lebensmittelzusammensetzung beeinflusst werden. Durch die Oberflächenprofilierung, insbesondere die Riffelung, ist zudem eine Oberflächentexturierung der Lebensmittelzusammensetzung erzeugbar.

Eine Anlage gemäß Anspruch 11 ist besonders flexibel. Mittels der mindestens einen Zuführleitung ist die Austragvorrichtung flexibel an gängige Aufbereitungsvorrichtungen, beispielsweise Extruder, anschließbar. Ein direkter Anschluss ist nicht erforderlich. Die Austragsvorrichtung ist einfach an bestehenden Austragungsvorrichtungen anschließbar. Die Zuführleitung kann hierbei insbesondere als Adapter dienen. Mittels der Zuführleitung kann insbesondere eine Fließrichtung der zuzuführenden Lebensmittelzusammensetzung beeinflussbar sein. Beispielsweise kann eine in horizontaler Richtung in einem Extruder geförderte Lebensmittelzusammensetzung mithilfe der Zuführung derart geführt werden, dass diese in vertikaler Richtung in den Spalt der Austragsvorrichtung eintritt.

Die mindestens eine Zuführleitung kann insbesondere als Rohr ausgebildet sein. Ein Rohrdurchmesser der mindestens einen Zuführleitung kann einem Durchmesser der mindestens einen Zuführöffnung entsprechen. Für einen Rohrdurchmesser Dz kann beispielsweise gelten: 15 mm ≤ Dz ≤ 100 mm, insbesondere 17,5 mm ≤ Dz ≤ 50 mm. Ein beispielhafter Rohrdurchmesser Dz kann beispielsweise ca. 20 mm betragen.

Bevorzugt ist die mindestens eine Zuführleitung temperierbar. Hierdurch kann die in der Zuführleitung zugeführte Lebensmittelzusammensetzung vortemperiert werden. Insbesondere ist ein ungewolltes Auskühlen oder Aushärten der Lebensmittelzusammensetzung in der Zuführleitung vermieden.

Die mindestens eine Zuführleitung kann insbesondere weitere Einbauten, beispielsweise Blenden und/oder statische Mischer, aufweisen. Hierdurch ist ein Fluidstrom der Lebensmittelzusammensetzung gezielt beeinflussbar. Ein Entmischen von Bestandteilen der Lebensmittelzusammensetzung ist vermieden.

Eine Anlage gemäß Anspruch 12 ist besonders vielseitig und flexibel einsetzbar. Durch die mindestens eine zusätzliche Zugangsöffnung können weitere Zutaten der Lebensmittelzusammensetzung zugeführt werden, beispielsweise pflanzliches Öl. Es ist insbesondere möglich, verschiedene Komponenten der Lebensmittelzusammensetzung unabhängig voneinander aufzubereiten, insbesondere unabhängig voneinander zu extrudieren, und in der Austragsvorrichtung zusammenzuführen. Hierdurch ist ein gemeinsamer Austrag von koextrudierten Bestandteilen der Lebensmittelzusammensetzung möglich.

Mittels der mindestens einen zusätzlichen Zugangsöffnung können auch Sensoren zur Überwachung des Fluidstroms der Lebensmittelzusammensetzung eingebracht werden. Beispielsweise kann hierüber eine Temperatur, Dichte und/oder Zusammensetzung der Lebensmittelzusammensetzung kontrollierbar sein. Dies erlaubt frühzeitig auf Fertigungsprobleme zu reagieren und vermeidet Ausschüsse.

Die mindestens eine zusätzliche Zugangsöffnung ist bevorzugt in mindestens einer Zuführleitung angeordnet. Beizumischende Zutaten können bereits im Bereich der Zuführleitung zugeführt werden. Über Einbauten der mindestens einen Zuführleitung, beispielsweise in Form von Blenden, kann die Beimischung einfach gesteuert werden. Zusätzlich oder alternativ ist ein Einmischen der beigemischten Zutaten über Einbauten der mindestens einen Zuführleitung, beispielsweise in Form von statischen Mischern, möglich. Mittels mindestens einer zusätzlichen Zugangsöffnung ist zusätzlich oder alternativ eine sensorische Überwachung der Lebensmittelzusammensetzung in der mindestens einen Zuführleitung möglich. Dies ermöglicht eine besonders schnelle und zuverlässige Reaktion auf eventuelle Abweichungen der Lebensmittelzusammensetzung von einem Sollmaß.

Zusätzlich oder alternativ kann die Austragsvorrichtung mindestens eine zusätzliche Zugangsöffnung zu dem Spalt aufweisen. Über die mindestens eine zusätzliche Zugangsöffnung zu dem Spalt können beispielsweise ein oder mehrere weitere Bestandteile der Lebensmittelzusammensetzung direkt in den Spalt eindringbar sein, insbesondere kontinuierlich zuführbar sein. Dies ermöglicht ein gezieltes Zudosieren weiterer Bestandteile der Lebensmittelzusammensetzung während des Austrags. Die mindestens eine zusätzliche Zugangsöffnung zu dem Spalt kann beispielsweise als Durchgangsöffnung in einem der Begrenzungselemente, insbesondere in einem feststehenden Begrenzungselement, ausgebildet sein.

Es ist eine weitere Aufgabe der Erfindung, ein Verfahren zur Texturierung einer Lebensmittelzusammensetzung, insbesondere einer Fleischersatz-Zusammensetzung, zu verbessern.

Diese Aufgabe ist gelöst durch ein Verfahren mit den in Anspruch 13 angegebenen Schritten. Eine Anlage, wie sie oben beschrieben ist, wird bereitgestellt. Eine zu texturierende Lebensmittelzusammensetzung wird mithilfe der mindestens einen Aufbereitungsvorrichtung der Anlage kontinuierlich aufbereitet und über die mindestens eine Zuführöffnung in den Spalt der Austragsöffnung zugeführt. Das erste Begrenzungselement wird relativ zu dem zweiten Begrenzungselement drehangetrieben zur Erzeugung von Scherkräften auf die im Spalt befindliche Lebensmittelzusammensetzung zu deren Texturierung. Die texturierte Lebensmittelzusammensetzung wird kontinuierlich über die mindestens eine Austragsöffnung ausgetragen. Das Verfahren ist flexibel einstellbar und skalierbar. Das Verfahren weist insbesondere die in Bezug auf die oben beschriebene Austragsvorrichtung beschriebenen Vorteile auf. Die bereitgestellte Austragsvorrichtung kann ein oder mehrere der oben beschriebenen optionalen Merkmale aufweisen.

Die zu texturierende Lebensmittelzusammensetzung, insbesondere Fleischersatz-Zusammensetzung, kann vor Zuführung in den Spalt aufbereitet, insbesondere kontinuierlich aufbereitet, werden. Die Lebensmittelzusammensetzung kann beispielsweise in einem Extruder kontinuierlich aufbereitet und der Austragsvorrichtung zugeführt werden. Es ist auch möglich, verschiedene Bestandteile der Lebensmittelzusammensetzung unabhängig voneinander aufzubereiten und in der Austragsvorrichtung, insbesondere in mindestens einer Zuführleitung der Austragsvorrichtung, zusammenzuführen. Beispielsweise können verschiedene Bestandteile der Lebensmittelzusammensetzung in unterschiedlichen Extrudern extrudiert werden und in der Austragsvorrichtung, insbesondere in mindestens einer Zuführleitung der Austragsvorrichtung, zusammengeführt werden.

Insbesondere werden das erste Begrenzungselement und das zweite Begrenzungselement derart relativ zueinander drehangetrieben, dass für eine relative Drehzahl n gilt: 0 · 1/min < n ≤ 40 · 1/min, insbesondere 5 · 1/min ≤ n ≤ 20 · 1/min. Das Verfahren hat sich als besonders geeignet zur Texturierung von Lebensmittelzusammensetzungen, insbesondere Fleischersatz-Zusammensetzungen, erwiesen. Eine beispielhafte Drehzahl kann etwa 10 · 1/min betragen. Bevorzugt ist die Drehzahl variabel.

Insbesondere kann ein Begrenzungselement feststehend ausgebildet sein. Die relative Drehbewegung kann dann durch Drehantrieb des anderen Begrenzungselements erzeugt werden. Dann entspricht die relative Drehzahl der absoluten Drehzahl des drehangetriebenen Begrenzungselements. Der Drehantrieb nur eines Begrenzungselements ist einfach und zuverlässig.

Insbesondere wird eine Drehrichtung, mit welcher das erste Begrenzungselement und das zweite Begrenzungselement relativ zueinander drehangetrieben werden, während des Austragsprozesses invertiert, insbesondere wiederholt invertiert. Das Verfahren erlaubt eine besonders starke Beeinflussung der Texturierung. Durch die Invertierung der Drehrichtung können Faserstrukturen in unterschiedlichen Richtungen ausgebildet werden. Durch einen oder mehrere Drehrichtungswechsel kann zudem eine Auflockerung der Textur bewirkt werden. Beispielsweise kann durch den Drehrichtungswechsel ein Aufreißen bzw. Auftrennen der Lebensmittelzusammensetzung bewirkt werden.

Besonders effizient ist der Drehrichtungswechsel in Verbindung mit mindestens einem Texturierwerkzeug, insbesondere mindestens einem Texturierwerkzeug in Form mindestens eines Leitbleches. Beispielsweise kann durch eine Anordnung von Leitblechen in einer bestimmten Richtung, beispielsweise durch eine spiralförmige Anordnung der Leitbleche, der Einfluss der Drehrichtung und/oder deren Invertierung erhöht werden.

Insbesondere wird die Lebensmittelzusammensetzung mit einem Druck p über die Zuführöffnung zugeführt, wobei für den Druck p gilt: 0 bar < p ≤ 50 bar, insbesondere 1 bar ≤ p ≤ 35 bar, insbesondere 3 bar ≤ p ≤ 20 bar. Das Verfahren hat sich als besonders geeignet erwiesen. Mit gängigen Aufbereitungsvorrichtungen, insbesondere gängigen Extrudern, können entsprechende Förderdrücke erzeugt werden. Abhängig von Druck und gewünschter Texturierung kann beispielsweise eine Anpassung der relativen Drehgeschwindigkeit der Begrenzungselemente erfolgen.

Insbesondere wird die texturierte Lebensmittelzusammensetzung mit einem Durchsatz m über die mindestens eine Austragsöffnung ausgetragen, wobei gilt: 10 kg/h ≤ m ≤ 2000 kg/h, insbesondere 20 kg/h ≤ m ≤ 1000 kg/h, insbesondere 30 kg/h ≤ m ≤ 500 kg/h. Das Verfahren ist einfach und flexibel skalierbar. Bevorzugt kann bei höherem Durchsatz eine größere Texturieroberfläche der Begrenzungselemente gewählt werden. Dies gewährleistet eine ausreichende Texturierung auch bei großen Durchsätzen. Mit der Texturieroberfläche kann insbesondere eine Temperierfläche skaliert werden. Beispielsweise kann die Texturierung mit einem Durchsatz von etwa 20 kg/h, etwa 400 kg/h oder etwa 2.000 kg/h erfolgen.

Insbesondere werden unterschiedliche Temperier-Teilbereiche der ersten Texturieroberfläche und/oder der zweiten Texturieroberfläche unterschiedlich temperiert, insbesondere in Abhängigkeit von einem Abstand zu der Rotationsachse temperiert. Das Verfahren ist besonders flexibel einsetzbar. Durch die unterschiedliche Temperierung verschiedener Temperier-Teilbereiche kann eine zunehmende Abkühlung und Verfestigung der Lebensmittelzusammensetzung erfolgen. Alternativ oder zusätzlich hierzu kann alternierend ein Abkühlen und Erwärmen erfolgen. Besonders bevorzugt wird ein Temperaturgradient in Richtung von der mindestens einen Zuführöffnung zu der mindestens einen Austragsöffnung, insbesondere in radialer Richtung, erzeugt.

Weitere Merkmale, Vorteile und Einzelheiten der Erfindung ergeben sich aus der nachfolgenden Beschreibung eines Ausführungsbeispiels anhand der Figuren. Es zeigen:
- Fig. 1: eine Seitenansicht einer Anlage zur Herstellung einer Lebensmittelzusammensetzung mit einer Aufbereitungsvorrichtung und einer hieran angeschlossenen Austragsvorrichtung,
- Fig. 2: einen Längsschnitt durch die Anlage gemäß Fig. 1,
- Fig. 3: eine perspektivische Ansicht der Austragsvorrichtung der Anlage gemäß Fig. 1,
- Fig. 4: eine Draufsicht auf die Austragsvorrichtung gemäß Fig. 3,
- Fig. 5: eine Seitenansicht der Austragsvorrichtung gemäß Fig. 3,
- Fig. 6: einen Längsschnitt durch die Austragsvorrichtung entlang einer Schnittlinie VI-VI in Fig. 5,
- Fig. 7: einen Einsatz für ein Begrenzungselement der Austragsvorrichtung gemäß Fig. 3 mit einem Leitbleche aufweisenden Texturierwerkzeug,
- Fig. 8: eine Seitenansicht eines weiteren Einsatzes für ein Begrenzungselement der Austragsvorrichtung gemäß Fig. 3 mit einem konusförmigen Texturierwerkzeug,
- Fig. 9: einen Querschnitt durch ein beispielhaftes Begrenzungselement mit einem darin ausgebildeten Temperierkanal,
- Fig. 10: einen Querschnitt durch ein beispielhaftes Begrenzungselement mit darin ausgebildeten Temperierkanälen und
- Fig. 11: einen Längsschnitt durch Begrenzungselemente eines weiteren Ausführungsbeispiels einer Austragsvorrichtung.

Eine Anlage 1 zur Herstellung einer Lebensmittelzusammensetzung weist eine Aufbereitungsvorrichtung 2 und eine Austragsvorrichtung 3 auf. Die Anlage 1 dient zur Herstellung einer Fleischersatz-Zusammensetzung, insbesondere eines High Moisture Meat Analogue (HMMA).

Die Aufbereitungsvorrichtung 2 weist einen Extruder 4 zur kontinuierlichen Aufbereitung der Lebensmittelzusammensetzung auf. Der Extruder 4 ist ein Doppelschneckenextruder. Der Extruder 4 umfasst ein Gehäuse mit darin ausgebildeten Gehäusebohrungen, in denen eine jeweilige Schneckenwelle 5 drehantreibbar gelagert ist. Über eine Dosiervorrichtung 6 können dem Extruder 4 Ausgangsbestandteile der Lebensmittelzusammensetzung zugeführt werden. Die zugeführten Ausgangsbestandteile werden im Extruder 4 erhitzt und mittels der Schneckenwellen 5 gefördert und vermischt. Mittels Beimischvorrichtungen 7 können weitere Bestandteile der Lebensmittelzusammensetzung, beispielsweise pflanzliches Öl und/oder Aromastoffe, entlang der Förderstrecke der Schneckenwellen 5 beigemischt werden.

Die aufbereitete Lebensmittelzusammensetzung wird durch eine Austrittsöffnung 8 des Extruders 4 gefördert. An die Austrittsöffnung 8 des Extruders 4 ist eine Zuführleitung 9 der Austragsvorrichtung 3 angeschlossen. Die Zuführleitung 9 ist als Rohrleitung ausgebildet und verbindet eine Zuführöffnung 10 der Austragsvorrichtung 3 mit der Austrittsöffnung 8 des Extruders 4. Die Lebensmittelzusammensetzung verlässt den Extruder 4 über die Austragsöffnung 8 als erhitzte Schmelze, insbesondere als Proteinschmelze. Die Proteinschmelze wird im Extruder 4 in horizontaler Richtung gefördert. Durch die Zuführleitung 9 kann eine Fließrichtung der Schmelze umgelenkt werden. Mithilfe der Zuführleitung 9 können die Aufbereitungsvorrichtung 2 und die Austragsvorrichtung 3 flexibel zueinander angeordnet werden. Die Zuführleitung 9 kann als Adapter zwischen der Austrittsöffnung 8 des Extruders 4 und der Zuführöffnung 10 der Austragsvorrichtung 3 dienen.

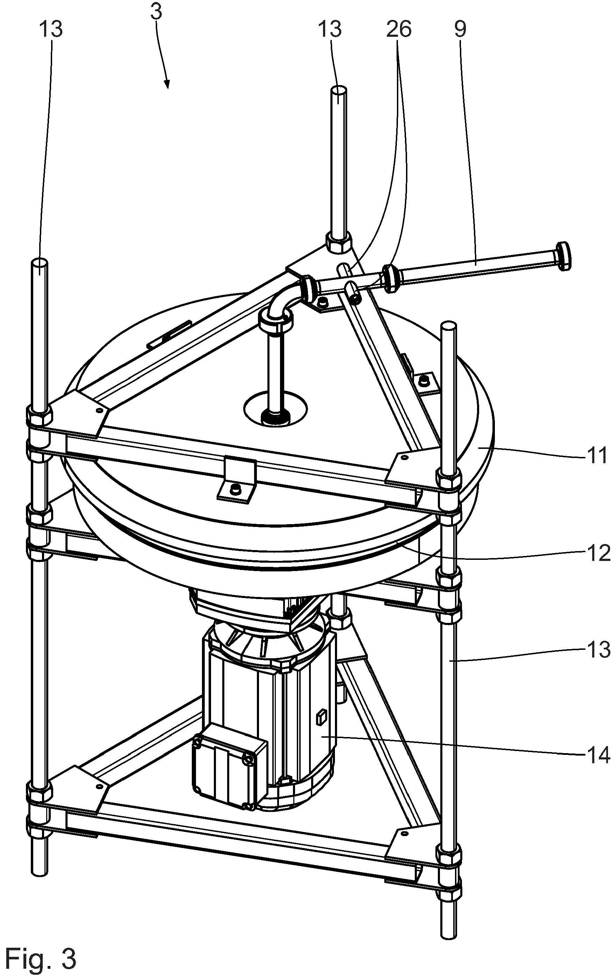

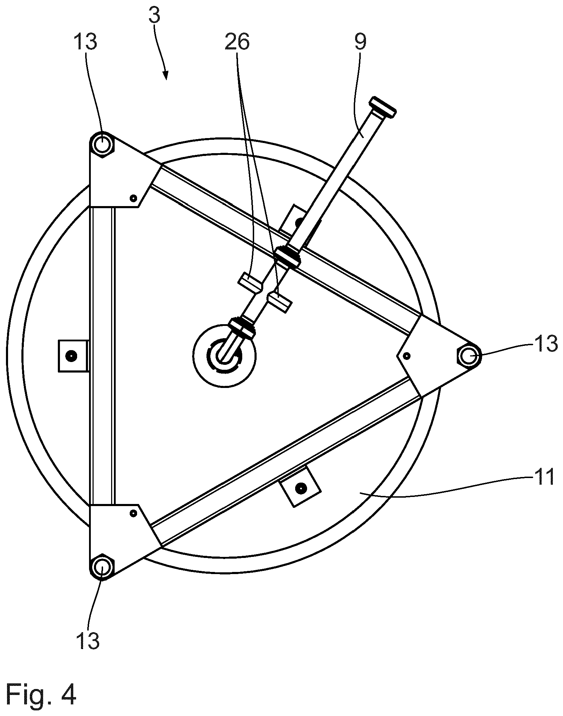

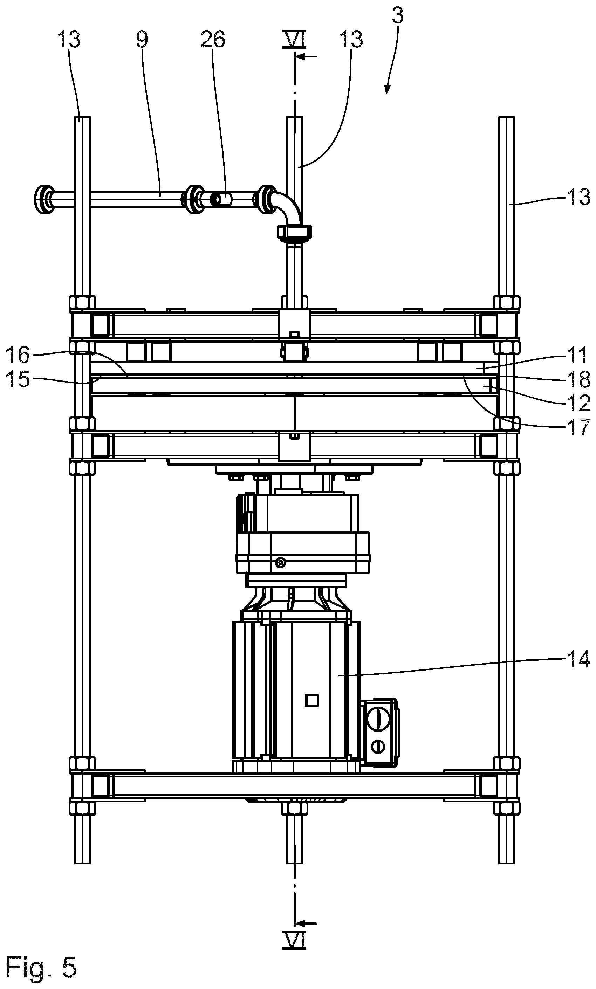

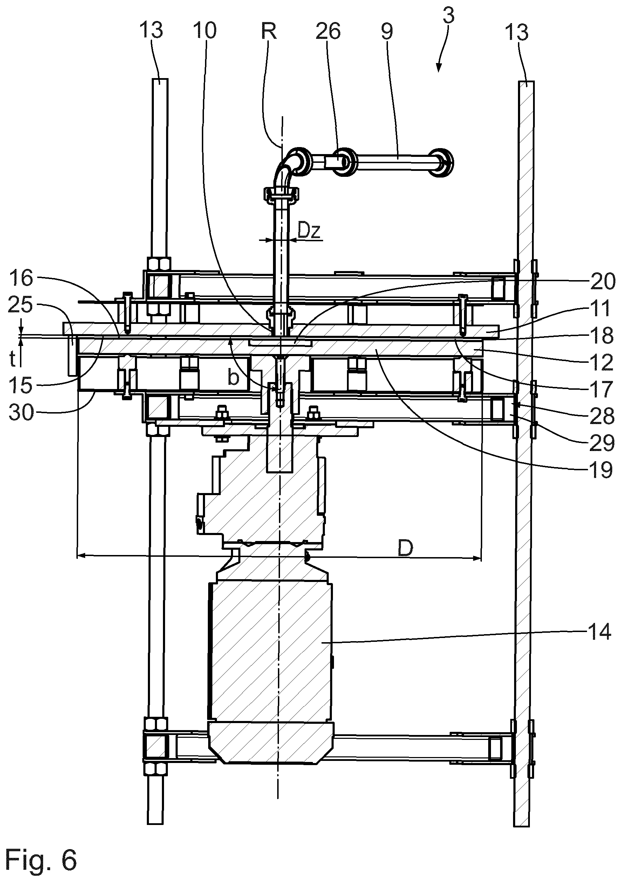

Im Folgenden wird die Austragsvorrichtung 3 mit Bezug auf die Figuren 3 bis 6 im Detail beschrieben.

Die Austragsvorrichtung 3 weist ein erstes Begrenzungselement 11 und ein zweites Begrenzungselement 12 auf. Das erste Begrenzungselement 11 ist drehfest an einem Tragegestell 13 der Austragsvorrichtung 3 angeordnet. Das zweite Begrenzungselement 12 ist mittels eines Drehantriebs 14 um eine Rotationsachse R drehantreibbar. Mithilfe des Drehantriebs 14 sind die beiden Begrenzungselemente 11, 12 relativ zueinander drehantreibbar.

Die Begrenzungselemente 11, 12 sind jeweils in Form von kreisförmigen Platten ausgebildet, die konzentrisch zu der Rotationsachse R angeordnet sind. Senkrecht zu der Rotationsachse R sind die Begrenzungselemente 11, 12 parallel zueinander angeordnet. Die Haupterstreckung der Begrenzungselemente 11, 12 ist senkrecht zu der Rotationsachse R.

Das erste Begrenzungselement 11 weist eine erste Texturieroberfläche 15 auf. Die erste Texturieroberfläche 15 ist die dem zweiten Begrenzungselement 12 zugewandten Oberfläche des Begrenzungselements 11. Das zweite Begrenzungselement 12 weist eine zweite Texturieroberfläche 16 auf. Die zweite Texturieroberfläche 16 ist die Oberfläche des Begrenzungselements 12, die dem ersten Begrenzungselement 11 zugewandt ist. Die Texturieroberflächen 15, 16 der Begrenzungselemente 11, 12 sind eben ausgebildet. Die Texturieroberflächen 15, 16 verlaufen parallel zueinander in einer Normalenebene der Rotationsachse R. Die Texturieroberflächen 15, 16 erstrecken sich in radialer Richtung von der Rotationsachse R zu einem umfangseitigen Rand der Begrenzungselemente 11, 12. Die Texturieroberflächen 15, 16 schließen mit der Rotationsachse R einen Winkel b ein, wobei b = 90° gilt. Die Texturieroberflächen 15, 16 verlaufen in Bezug auf die Normalenebene der Rotationsachse R unter einem Winkel c, für den gilt c = 90° - b = 0°.

Zwischen den Texturieroberflächen 15, 16 ist ein Spalt 17 ausgebildet. Die Texturieroberflächen 15, 16 sind in Richtung der Rotationsachse R voneinander beabstandet. Aufgrund der parallelen Anordnung der ebenen Texturieroberflächen 15, 16 ist ein Spaltmaß t über die gesamte Fläche der Texturieroberflächen 15, 16 konstant. Das Spaltmaß t kann durch Zustellung der Begrenzungselemente 11, 12 relativ zueinander, insbesondere durch Zustellung des drehfest angeordneten Begrenzungselements 11, in Richtung der Rotationsachse R angepasst werden. Das Spaltmaß t kann beispielsweise folgende Maße aufweisen: 5 mm ≤ t ≤ 20 mm, insbesondere 8 mm ≤ t ≤ 15 mm, beispielsweise t = 10 mm.

Die Zuführöffnung 10 ist als Durchgangsöffnung in dem Begrenzungselement 11 ausgebildet. Die Zuführöffnung 10 ist im Bereich der Rotationsachse R als Öffnung in dem Begrenzungselement 11 ausgebildet. Die Zuführöffnung 10 ist mit der Zuführleitung 9 fluidleitend verbunden. Die Zuführöffnung 10 weist einen Durchmesser auf, der im Wesentlichen einem Rohrdurchmesser Dz des die Zuführleitung 9 bildenden Rohres entspricht. Der Rohrdurchmesser Dz kann beispielsweise folgende Werte annehmen: 15 mm ≤ Dz ≤ 100 mm, insbesondere 17, 5 mm ≤ Dz ≤ 50 mm, beispielsweise Dz = 20 mm.

Der Spalt 17 ist umfangsseitig offen. Durch die umfangseitige Öffnung des Spalts 17 ist eine umfangsseitige Austragsöffnung 18 gebildet. Die Austragsöffnung 18 ist weiter von der Rotationsachse R beabstandet als die Zuführöffnung 10. Zwischen der Zuführöffnung 10 und der Austragsöffnung 18 erstrecken sich die Texturieroberflächen 15, 16 in radialer Richtung.

Über die Zuführleitung 9 und die Zuführöffnung 10 ist eine Lebensmittelzusammensetzung kontinuierlich in den Spalt 17 zuführbar. Die Lebensmittelzusammensetzung durchtritt, insbesondere durchfließt, den Spalt 17 in radialer Richtung hin zu der Austragsöffnung 18. Beim Durchtritt durch den Spalt 17 interagiert die Lebensmittelzusammensetzung mit den Texturieroberflächen 15, 16. Durch den Kontakt mit den Texturieroberflächen 15, 16 wird die Lebensmittelzusammensetzung abgebremst, sodass sich im Spalt ein Geschwindigkeitsgefälle ergibt. Hierdurch entsteht eine Scherung innerhalb der Lebensmittelzusammensetzung, wodurch die Lebensmittelzusammensetzung texturiert wird. Insbesondere bildet sich eine faserige Struktur der Lebensmittelzusammensetzung aus. Die Scherung entsteht einerseits durch eine erste Scherungskomponente aufgrund des Durchtritts der Lebensmittelzusammensetzung von Zuführöffnung 10 zu Austragsöffnung 18 in radialer Richtung. Durch gleichzeitigen relativen Drehantrieb der Begrenzungselemente 11, 12 entsteht eine zusätzliche zweite Scherungskomponente, die durch den Drehantrieb insbesondere durch die Drehzahl und die Drehrichtung beeinflussbar ist. Eine mögliche relative Drehzahl n kann beispielsweise folgende Werte annehmen: 0 ·1/min < n ≤ 40 · 1/min. Insbesondere 5 · 1/min ≤ n ≤ 20 · 1/min, beispielsweise 10 · 1/min.

Die Texturierung der Lebensmittelzusammensetzung ist des Weiteren über die Größe der Texturierungsoberflächen 15, 16 beeinflussbar und/oder dem Spaltmaß t des Spaltes 17 beeinflussbar.

Die Größe der Texturierungsoberflächen 15, 16 ergibt sich im Wesentlichen aus deren Ausdehnung in radialer Richtung, die einem Durchmesser D des Begrenzungselements 12 entspricht. Das Begrenzungselement 11 hat in dem gezeigten Ausführungsbeispiel einen geringfügig größeren Durchmesser, dies beeinflusst die maßgebliche Größe der relevanten Texturieroberflächen jedoch nicht. Der Durchmesser D kann beispielsweise zwischen 200 mm und 3.000 mm, insbesondere zwischen 250 mm und 2.500 mm, insbesondere zwischen 500 mm und 2.000 mm liegen. Beispielhafte Werte für den Durchmesser D sind etwa 260 mm, 650 mm, 1.000 mm oder 2.300 mm.

Die Texturieroberflächen 15, 16 weisen eine Oberflächenprofilierung in Form einer Riffelung auf. Durch die Riffelungen können Scherkräfte besonders effizient auf im Spalt 17 befindliche Lebensmittelzusammensetzung eingebracht werden. Zudem ist hierdurch die Oberfläche der Lebensmittelzusammensetzung texturierbar.

In einem Begrenzungselementgrundkörper 19 des Begrenzungselements 12 ist ein Einsatz 20 eingesetzt. Der Einsatz 20 ist gegenüberliegend der Zuführöffnung 10 angeordnet. Der Einsatz 20 ist lösbar in dem Begrenzungselementgrundkörper 19 eingesetzt. Der Einsatz 20 ist wechselbar. Durch das Wechseln des Einsatzes 20 können unterschiedliche Texturierwerkzeuge in den Spalt 17 eingebracht werden, um die Texturierung der Lebensmittelzusammensetzung weiter zu beeinflussen. Mittels entsprechender Texturierwerkzeuge kann beispielsweise der Strom der Lebensmittelzusammensetzung gelenkt und geteilt werden. Geeignete Texturierwerkzeuge können beispielsweise zu einer lokalen Verjüngung des Spalts führen. Das Texturierwerkzeug weist insbesondere Leitbleche, Vorsprünge, insbesondere Stifte oder Kegel, Rechen, Gitter, Filter und/oder Siebe auf.

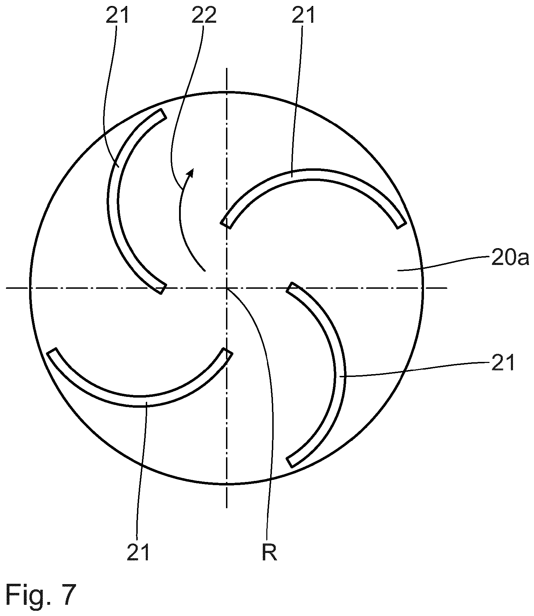

In Fig. 7 ist ein beispielhafter Einsatz 20a mit einem durch Leitbleche 21 gebildeten Texturierwerkzeug gezeigt. Die Leitbleche 21 sind spiralförmig um die Rotationsachse R angeordnet. Die Leitbleche 21 ermöglichen ein weiteres Durchmischen der Lebensmittelzusammensetzung. Zudem kann mittels der spiralförmig angeordneten Leitbleche 21 die Produktform der Lebensmittelzusammensetzung beeinflusst werden. Bei Drehrichtung im Sinne der Spiralanordnung (bei der in Fig. 7 angezeigten Anordnung im Uhrzeigersinn) wird die Lebensmittelzusammensetzung durch die Spiralarme aufgenommen und entlang eines exemplarisch in Fig. 7 angezeigten Pfeils 22 nach außen gefördert. Hierdurch entsteht eine stangenförmige Produktform der Lebensmittelzusammensetzung. Ein Drehantrieb in Drehrichtung entgegen der Spiralrichtung der Leitbleche 21 (in Fig. 7 entgegen des Uhrzeigersinns), führt zu einer Abscherung der Lebensmittelzusammensetzung durch die Leitbleche 21. Dies lockert die Struktur der Lebensmittelzusammensetzung weiter auf. Es resultiert eine kleinteilige und zerrissene Produktform der Lebensmittelzusammensetzung.

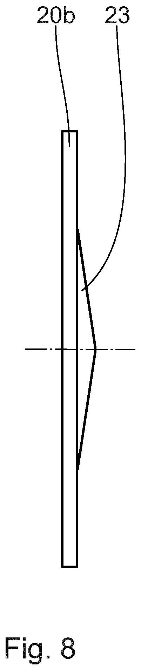

In Fig. 8 ist eine weitere exemplarische Ausgestaltung eines Einsatzes 20b gezeigt. Der Einsatz 20b weist eine konische Erhebung 23 auf. Durch die konische Erhebung 23 wird das Spaltmaß gegenüberliegend der Zuführöffnung 10 verjüngt. Dies führt zu einem Gegendruck gegen die kontinuierlich über die Zuführöffnung 10 zugeführte Lebensmittelzusammensetzung. Hierdurch wird die Lebensmittelzusammensetzung gleichmäßig in Umfangrichtung verteilt. Durch den Abfall des Konus in radialer Richtung und die vergrößerte Fläche wird der Druck auf die Lebensmittelzusammensetzung vermindert, was eine Auflockerung deren Struktur begünstigt.

Die Rotationsachse R verläuft in Schwerkraftrichtung. Der Austrag der Lebensmittelzusammensetzung über den Spalt 17 erfolgt daher im Wesentlichen in horizontaler Richtung.

Die Lebensmittelzusammensetzung tritt kontinuierlich aus der Austrittsöffnung 18 aus. Zur gezielten Abtrennung und Portionierung der ausgetragenen Lebensmittelzusammensetzung ist eine Abstreifvorrichtung 25 im Bereich der Austragsöffnung 18 angeordnet. Die Abstreifvorrichtung 25 ist an dem drehfest angeordneten Begrenzungselement 11 angeordnet. Mithilfe der Abstreifvorrichtung 25 wird die ausgetragene Lebensmittelzusammensetzung an einer definierten Umfangsposition abgelöst und gesammelt.

In anderen Ausführungsbeispielen kann die Austragsöffnung in Umfangsrichtung des Spalts durch ein Verschlusselement abgedeckt sein. In dem Verschlusselement können eine oder mehrere Öffnungen gebildet sein, um einen gezielten Austrag der Lebensmittelzusammensetzung, insbesondere an einer oder mehreren genau definierten Umfangspositionen, zu gewährleisten.

In der Zuführleitung 9 sind zusätzliche Zugangsöffnungen 26 ausgebildet. Die Zugangsöffnungen 26 sind als Verbindungs- bzw. Anschlussstücke ausgebildet. Die Zugangsöffnungen 26 ermöglichen einen weiteren Zugang zu der Zuführleitung 9. Über die Zugangsöffnungen 26 kann beispielsweise eine weitere Komponente der Lebensmittelzusammensetzung, die nicht durch die Aufbereitungsvorrichtung 2 bereitgestellt wird, beigemischt werden. Beispielsweise können mehrere Aufbereitungsvorrichtungen 2 vorhanden sein, die verschiedene Bestandteile der Lebensmittelzusammensetzung koextrudieren. Weitere Bestandteile der Lebensmittelzusammensetzung können über die Zugangsöffnungen 26 in die Zuführleitung 9 eingebracht werden.

Alternativ oder zusätzlich kann der über die Zugangsöffnungen 26 ermöglichte Zugang zur Vermessung der auszutragenden Lebensmittelzusammensetzung mittels geeigneter Sensoren verwendet werden. Beispielsweise können verschiedene Sensoren über die Zugangsöffnungen 26 eingebracht werden, um Temperatur, Druck, Dichte, Zusammensetzung oder andere Parameter der auszutragenden Lebensmittelzusammensetzung zu vermessen.

Die Austragsvorrichtung 3 weist eine nicht näher dargestellte Temperiereinheit 28 auf. Die Temperiereinheit 28 dient zum Temperieren der Begrenzungselemente 11, 12 und damit der Texturieroberflächen 15, 16. Die Temperiereinheit 28 weist in den Begrenzungselementen 11, 12 ausgebildete Temperierkanäle für ein Temperiermedium, insbesondere für ein Kühlmedium, auf. Die Begrenzungselemente 11, 12 können mithilfe der Temperierkanäle der Temperiereinheit 28 getrennt voneinander, beispielsweise im Gleichstrom oder im Gegenstrom, temperiert werden. Die Temperiereinheit 28 weist hierfür einen Temperiermediumanschluss 29 und einen Temperiermediumabfluss 30 auf. Über den Temperiermediumanschluss 29 und den Temperiermediumabfluss 30 kann das Temperiermedium, beispielsweise Kühlwasser, in den in den Begrenzungselementen 11, 12 ausgebildeten Temperierkanälen umgepumpt werden.

Durch die Temperierung der Begrenzungselemente 11, 12 wird ein Temperierbereich der Texturieroberflächen 15, 16 temperiert. Der Temperierbereich weist insgesamt eine Temperierfläche Ak auf. Bevorzugt entspricht die Temperierfläche Ak im Wesentlichen der Fläche der Texturieroberflächen 15, 16. Die Temperierfläche Ak weist für die jeweiligen Begrenzungselemente im Wesentlichen den Durchmesser D auf.

Mithilfe der Temperiereinheit 28 kann die Lebensmittelzusammensetzung in dem Spalt 17 temperiert, insbesondere gekühlt werden. Durch das Temperieren, insbesondere durch das Kühlen, ist die Lebensmittelzusammensetzung aushärtbar. Bevorzugt wird hierbei eine zu starke Temperierung, insbesondere eine zu starke Kühlung vermieden, um ein Ankleben oder Festfrieren der Lebensmittelzusammensetzung auf den Texturieroberflächen 15, 16 zu vermeiden. Ein zur Kühlung verwendetes Temperiermedium, beispielsweise Wasser oder Glykol, insbesondere Propylen-Glykol und/oder Ethylen-Glykol, weist bevorzugt eine Temperatur T auf, für die gilt: 10°C ≤ T ≤ 100°C, insbesondere 15°C ≤ T ≤ 90°C, beispielsweise 20°C ≤ T ≤ 70°C. Hierüber ist eine schonende Kühlung der Lebensmittelzusammensetzung möglich.

Als besonders geeignet hat sich erwiesen, die Größe der Kühlfläche abhängig von dem stündlichen Durchsatz der Lebensmittelzusammensetzung zu wählen. Hierdurch ist auch bei moderater Temperierung, insbesondere Kühlung, eine ausreichende Temperierung, insbesondere Kühlung, der Lebensmittelzusammensetzung gewährleistet. Für die Temperierfläche Ak gilt beispielsweise: 40 cm²/(kg/h) ≤ Ak/m ≤ 1000 cm²/(kg/h), insbesondere 200 cm²/(kg/h) ≤ Ak/m ≤ 800·cm²/(kg/h), bevorzugt 300 cm²/(kg/h) ≤ Ak/m ≤ 600 cm²/(kg/h), wobei m der stündliche Durchsatz der Lebensmittelzusammensetzung in Kilogramm ist.

Als besonders geeignet hat sich erwiesen, wenn die Temperiereinheit 28 zur unterschiedlichen Temperierung unterschiedlicher Temperier-Teilbereiche der Texturieroberflächen 15, 16 ausgebildet ist. Insbesondere kann eine Temperierung abhängig vom radialen Abstand von der Rotationsachse R erfolgen. Hierdurch ist beispielsweise ein schrittweises Abkühlen der Lebensmittelzusammensetzung von der Zuführöffnung 10 zu der Austragsöffnung 18 möglich. Auch können unterschiedliche Temperier-Teilbereiche unterschiedlich temperiert werden, beispielsweise im Wechsel von warm zu kalt. Unterschiedliche Temperier-Teilbereiche können im Kreuzstrom, Gegenstrom und/oder Gleichstrom von dem Temperiermedium durchflossen werden. Auch ist es möglich, einzelne Temperier-Teilbereiche im offenen Wasserbad zu kühlen. Hierdurch ist ein gezielt an den jeweiligen Anwendungsfall anpassbares Temperaturprofil entlang der Texturieroberflächen 15, 16 erzeugbar.

Beispielsweise kann ein erster Temperier-Teilbereich in einem ersten Radiusbereich der Texturieroberflächen 15, 16, beispielsweise vom Zentrum der Texturieroberflächen bis zu einem Bruchteil des Radius, beispielsweise der Hälfte oder einem Drittel des Radius, gebildet sein. In angrenzenden Radiusbereichen können weitere Temperier-Teilbereiche ausgebildet sein.

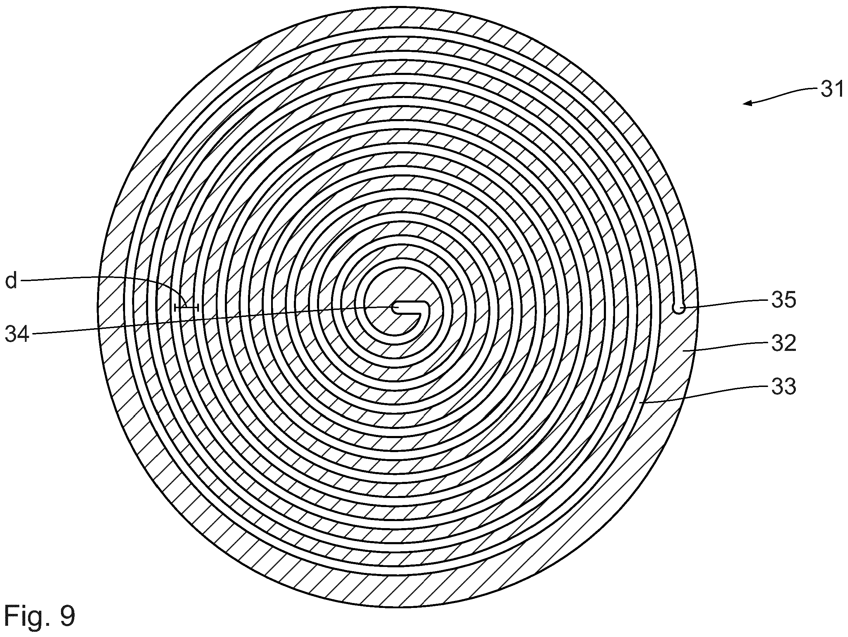

Mit Bezug auf Fig. 9 wird beispielhaft die Ausgestaltung eines Temperierbereichs in einem Begrenzungselement 31 beschrieben. Fig. 9 zeigt einen Querschnitt durch ein exemplarisches Begrenzungselement 31 mit einem Begrenzungselementgrundkörper 32. In dem Begrenzungselementgrundkörper 32 ist ein Temperierkanal 33 für ein Temperiermedium, insbesondere ein Kühlmedium, ausgebildet. Der Temperierkanal 33 erstreckt sich spiralförmig von einem mittig angeordneten Zuführ-Anschluss 34 zu einem randseitig angeordneten Abführ-Anschluss 35. Der Temperierkanal 33 umläuft den Mittelpunkt des Querschnitts mehrmals, wobei ein radialer Versatz d zwischen zwei Umläufen konstant ist. Der Temperierkanal 33 deckt hierbei im Wesentlichen den gesamten Durchmesser des Begrenzungselementgrundkörpers 32 gleichmäßig ab. Dies gewährleistet eine gleichmäßige Kühlung über die gesamte Texturieroberfläche des Begrenzungselements 31.

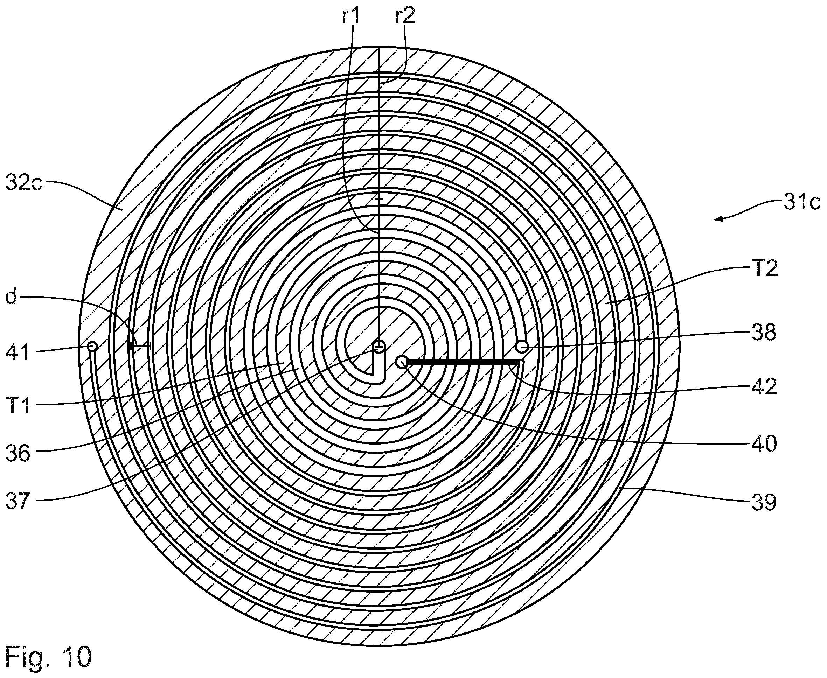

Mit Bezug auf Fig. 10 wird beispielhaft die Ausgestaltung mehrerer Temperier-Teilbereiche T1, T2 einem Begrenzungselement 31c beschrieben. Komponenten, die bereits mit Bezug auf Fig. 9 beschrieben wurden, tragen die gleichen Bezugszeichen und werden nicht nochmals im Detail erläutert. Funktionell gleiche, jedoch konstruktiv anders ausgebildete Komponenten tragen entsprechende Bezugszeichen mit einem nachgestellten c.

In Fig. 10 ist ein Querschnitt durch das Begrenzungselement 31c gezeigt. In dem Begrenzungselement 31c sind unterschiedliche Temperier-Teilbereiche T1, T2 ausgebildet. Ein erster Temperier-Teilbereich T1 ist zentral um den Mittelpunkt des Querschnitts ausgebildet. Er erstreckt sich von einem Mittelpunkt des Querschnitts bis zu einem Radius r1. Ein zweiter Temperier-Teilbereich T2 ist ringförmig um den ersten Temperier-Teilbereich T1 ausgebildet. Der zweite Temperier-Teilbereich T2 erstreckt sich vom Radius r1 bis zum äußeren Umfang des Querschnitts des Begrenzungselements 31c. Der zweite Temperier-Teilbereich T2 weist einen Ringradius r2 auf

In dem ersten Temperier-Teilbereich T1 ist ein erster Temperierkanal 36 für ein Temperiermedium ausgebildet. Der Temperierkanal 36 verläuft spiralförmig von einem mittig angeordnetem ersten Zuführ-Anschluss 37 zu einem ersten Abführ-Anschluss 38.

In dem zweiten Temperier-Teilbereich T2 ist ein zweiter Temperierkanal 39 für ein Temperiermedium ausgebildet. Der zweite Temperierkanal 39 erstreckt sich spiralförmig über den Ringradius r2 von einem zweiten Zuführanschluss 40 zu einem zweiten Abführanschluss 41. Der zweite Zuführ-Anschluss 40 ist im Bereich eines Mittelpunkts des Querschnitts angeordnet. Dies erleichtert die Zuführung des Temperiermediums über einen mittigen Drehanschluss. Zwischen dem zweiten Zuführ-Anschluss 40 und dem spiralförmig ausgebildeten zweiten Temperierkanal 39 ist ein Überbrückungskanal 42 ausgebildet, der sich im Wesentlichen in radialer Richtung erstreckt. Der Überbrückungskanal 42 überbrückt den ersten Temperier-Teilbereich T1 zur Zuführung des Temperiermediums in den Kühlkanal 39 des zweiten Temperier-Teilbereichs T2.

Der erste Temperierkanal 36 und der zweite Temperierkanal 39 verlaufen spiralförmig. Die Temperierkanäle 36, 39 umlaufen den Mittelpunkt des Querschnitts mehrmals, wobei ein radialer Versatz d je Umlauf jeweils gleich ist. Die Temperierkanäle 36, 39 decken den Querschnitt des Begrenzungselements 31c gleichmäßig ab. Die Temperierkanäle 36, 39 weisen einen unterschiedlichen Kanalquerschnitt auf. Bei dem gezeigten Ausführungsbeispiel ist der Kanalquerschnitt des Temperierkanals 36 größer als der des Temperierkanals 39. Der Temperierkanal 36 weist daher eine größere Durchflussfläche für das Temperiermedium auf als der Temperierkanal 39. Die Kühlwirkung ist im ersten Temperier-Teilbereich T1 größer als im zweiten Temperier-Teilbereich T2. Hierdurch wird ein Temperier-Gradient in radialer Richtung erzeugt. Alternativ oder zusätzlich können die Temperierkanäle 36, 39 mit unterschiedlichen Temperiermedien, insbesondere mit unterschiedlich temperierten Temperiermedien, durchflossen werden.

Bei dem in Fig. 10 gezeigten Ausführungsbeispiel weisen die Temperierbereiche T1, T2 die gleiche Erstreckung in radialer Richtung auf. In anderen, nicht dargestellten Ausführungsbeispielen können die Temperier-Teilbereiche unterschiedlich große radiale Teilbereiche abdecken. Es ist auch möglich, mehr als zwei Temperier-Teilbereiche auszubilden. Hierdurch kann ein radialer Verlauf der Temperierwirkung passgenau einstellbar sein.

Das erste Begrenzungselement 11 und/oder das zweite Begrenzungselement 12 der Austragsvorrichtung 3 können hinsichtlich der Ausgestaltung der Temperierkanäle wie das Begrenzungselement 31 in Fig. 9 oder das Begrenzungselement 31c in Fig. 10 ausgebildet sein. Es ist auch möglich, dass eines der Begrenzungselemente 11, 12 wie das Begrenzungselement 31 und das jeweils andere Begrenzungselement wie das Begrenzungselement 31c, hinsichtlich der Temperierkanäle ausgebildet ist.

Im Folgenden wird ein Verfahren zur Texturierung einer Lebensmittelzusammensetzung mithilfe der Austragsvorrichtung 3 beschrieben.

Die Lebensmittelzusammensetzung wird mithilfe der Aufbereitungsvorrichtung 2 kontinuierlich aufbereitet. Beispielsweise handelt es sich bei der Lebensmittelzusammensetzung um ein sogenanntes High Moisture Meat Analoge (HMMA). Geeignete Zusammensetzungen eines HMMA und deren Aufbereitung sind beispielsweise beschrieben in EP 3 270 716 B1.

Die aufbereitete Lebensmittelzusammensetzung wird insbesondere in Form einer Proteinschmelze aus der Austrittsöffnung 8 des Extruders 4 gefördert und der Zuführleitung 9 zugeführt. Die aufbereitete Lebensmittelzusammensetzung wird mit einem Druck p zugeführt. Für den Druck p gilt beispielsweise: 0 bar < p ≤ 50 bar, insbesondere 1 ≤ p ≤ 25 bar, beispielsweise 3 bar ≤ p ≤ 20 bar.

Die Lebensmittelzusammensetzung wird kontinuierlich über die Zuführöffnung 10 in den Spalt 17 zwischen den Texturieroberflächen 15, 16 zugeführt und durchtritt den Spalt 17 in radialer Richtung von der Zuführöffnung 10 zu der Austragsöffnung 18. Das Begrenzungselement 12 wird mittels des Drehantriebs 14 drehangetrieben. Hieraus resultiert ein relativer Drehantrieb der Begrenzungselemente 11, 12 um die Rotationsachse R. Durch den relativen Drehantrieb wird eine kontrollierte Scherung der Lebensmittelzusammensetzung in dem Spalt 17 bewirkt.

Die Begrenzungselemente 11, 12 werden mittels der Temperiereinheit 28 temperiert, insbesondere gekühlt. Unterschiedliche Temperier-Teilbereiche der Texturieroberflächen 15, 16 werden unterschiedlich temperiert, insbesondere um eine graduelle Kühlung der Lebensmittelzusammensetzung von der Zuführöffnung 10 zu der Austragsöffnung 18 hin zu bewirken. Die Lebensmittelzusammensetzung tritt kontinuierlich aus der Austragsöffnung 18 aus und wird mithilfe der Abstreifvorrichtung 25 abgetrennt und portioniert.

Die Austragsvorrichtung 3 dient daher dem kontinuierlichen Austragen der Lebensmittelzusammensetzung. Insbesondere wird die Lebensmittelzusammensetzung kontinuierlich von der Zuführöffnung 10 über den Spalt 17 und die Austragsöffnung 18 ausgetragen. Der Austrag erfolgt beispielsweise mit einem stündlichen Durchsatz m, für den gilt: 10 kg/h ≤ m ≤ 2000 kg/h, insbesondere 20 kg/h ≤ m ≤ 1000 kg/h, insbesondere 30 kg/h ≤ m ≤ 500 kg/h.

Die Austragsvorrichtung 3 kann einfach an den jeweiligen Anwendungsfall angepasst werden, ist insbesondere einfach skalierbar. Beispielsweise kann die Texturierung durch eine Änderung des Spaltmaßes t des Spalts 17 und/oder durch eine Änderung des relativen Drehantriebs der Begrenzungselemente 11, 12, insbesondere eine Änderung der Drehrichtung und/oder der relativen Drehzahl bewirkt, werden. Zusätzlich oder alternativ kann insbesondere ein Durchmesser D der Begrenzungselemente 11, 12 und damit der Texturieroberflächen 15, 16 angepasst werden.

Bei der gezeigten Austragsvorrichtung 3 sind die Begrenzungselemente 11, 12 als parallele Platten ausgebildet. Das Spaltmaß t des Spalts 17 ist daher konstant, insbesondere unabhängig von einem Abstand zu der Rotationsachse R. In anderen Ausführungsbeispielen kann das Spaltmaß t variieren, insbesondere abhängig von einem Abstand zu der Rotationsachse R sein. Beispielsweise kann das Spaltmaß t mit zunehmendem Abstand von der Rotationsachse R vergrößert oder verkleinert werden. Mit zunehmendem Abstand von der Rotationsachse R nimmt die Oberflächengeschwindigkeit der relativ zueinander angetriebenen Begrenzungselemente 11, 12 bei konstanter Drehzahl zu. Mit zunehmendem Abstand von der Rotationsachse R nimmt daher eine über den Drehantrieb eingebrachte Scherkraft zu. Durch eine Variation des Spaltmaßes t, insbesondere durch eine Vergrößerung des Spaltmaßes t, mit zunehmenden Abstand von der Rotationsachse R steht ein weiterer Parameter zur Beeinflussung der Scherkraft zur Verfügung. Durch Vergrößerung des Spaltmaßes t kann beispielsweise eine Erhöhung der eingebrachten Scherkraft mit zunehmenden Abstand von der Rotationsachse R entgegengewirkt werden. Durch geeignete Wahl des Spaltmaßes t kann insbesondere eine über den gesamten Radius homogene Scherkraft erzeugt werden.

In anderen Ausführungsbeispielen, kann beispielsweise eines der Begrenzungselemente als Konus oder als inverser Konus ausgebildet sein. In wiederum anderen, nicht dargestellten Ausführungsbeispielen, können beide Begrenzungselemente konisch ausgebildet sein. Durch die Wahl der Form der Begrenzungselemente, insbesondere durch die Form der Texturieroberflächen kann auf einfache Weise das Spaltmaß und damit das Texturierverhalten angepasst werden.

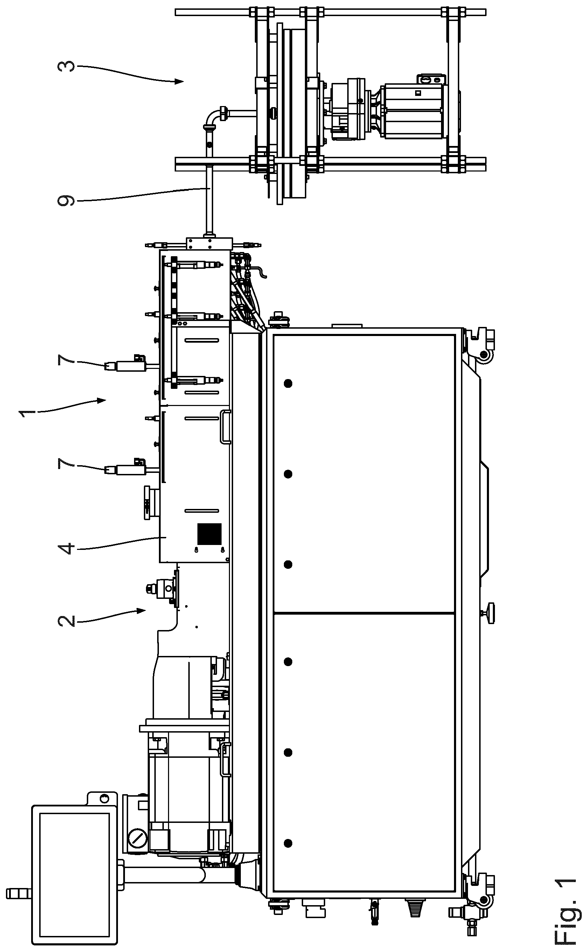

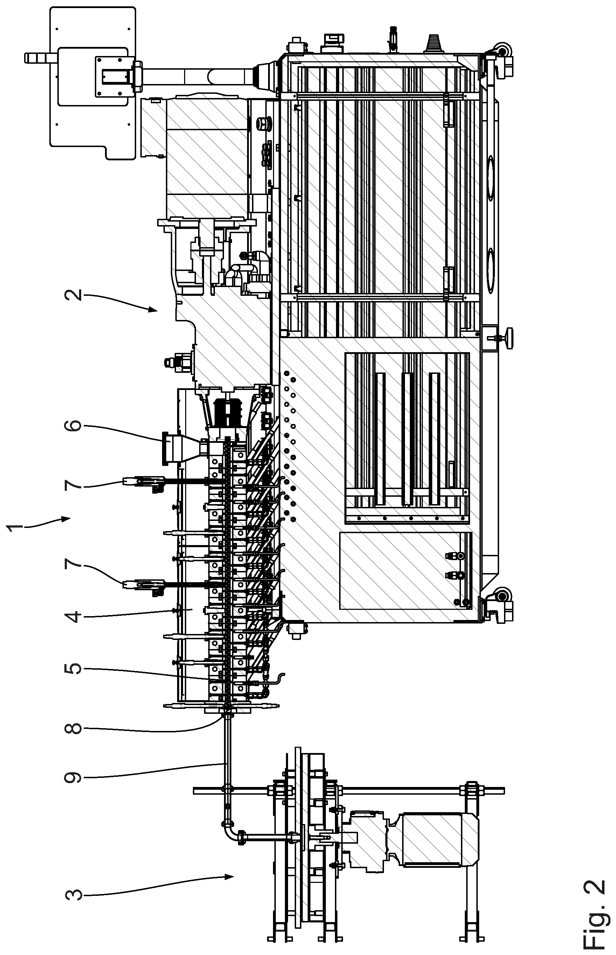

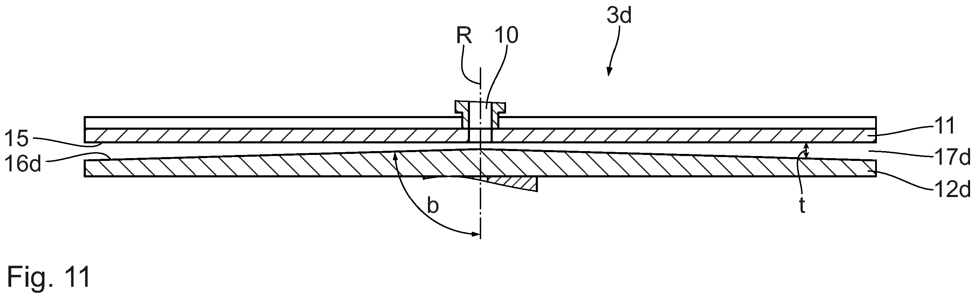

Mit Bezug auf Fig. 11 wird ein weiteres Ausführungsbeispiel einer Austragsvorrichtung 3d beschrieben. Komponenten, die in Bezug auf die Fig. 1 bis 10 bereits beschrieben wurden, tragen die gleichen Bezugszeichen und werden nicht nochmals im Detail erläutert. Funktionell gleich aber konstruktiv unterschiedliche Komponenten tragen entsprechende Bezugszeichen mit einem nachgestellten d.

Die Austragsvorrichtung 3d gemäß Fig. 11 unterscheidet sich von der Austragsvorrichtung 3 des in den Fig. 1 bis 8 gezeigten Ausführungsbeispiels nur durch die Ausgestaltung des zweiten Begrenzungselements 12d. Das erste Begrenzungselement 11 ist als kreisförmige ebene Platte ausgebildet. Das zweite Begrenzungselement 12d weist senkrecht zu der Rotationsachse R einen kreisförmigen Querschnitt auf. Die dem ersten Begrenzungselement 11 zugewandte Oberfläche des zweiten Begrenzungselements 12d ist konusförmig ausgebildet. Der Winkel b zwischen der zweiten Texturieroberfläche 16d und der Rotationsachse R ist kleiner als 90°. Der Winkel b beträgt in dem gezeigten Ausführungsbeispiel etwa 88°.

Aufgrund der konusförmigen Ausgestaltung des zweiten Begrenzungselements 12d weist der zwischen den Texturieroberflächen 15, 16d ausgebildete Spalt 17d ein mit zunehmenden Abstand von der Rotationsachse R zunehmendes Spaltmaß t auf.

Hinsichtlich der Ausgestaltung der Temperiereinheit, insbesondere hinsichtlich Geometrie und Anordnung von Temperierkanälen können die Begrenzungselemente 11, 12d der Austragsvorrichtung 3d ausgebildet sein, wie dies anhand der Begrenzungselemente 31, 31c in Fig. 9 bzw. 10 gezeigt ist.

Bei den gezeigten Ausführungsbeispielen weisen die Begrenzungselemente senkrecht zu der Rotationsachse R einen kreisförmigen Querschnitt auf. Prinzipiell sind auch andere Querschnitte denkbar. Beispielsweise können die Begrenzungselemente polygonale Querschnitte haben. Als besonders geeignet haben sich regelmäßige polygonale Querschnitte mit fünf oder mehr, insbesondere mit 6 oder mehr, bevorzugt mit acht oder mehr, Ecken erwiesen.

## Patentansprüche

1. Anlage zur Herstellung einer Lebensmittelzusammensetzung, insbesondere einer Fleischersatz-Zusammensetzung, aufweisend
- mindestens eine Aufbereitungsvorrichtung (2) zum kontinuierlichen Aufbereiten der Lebensmittelzusammensetzung und
- eine Austragsvorrichtung (3; 3d) zum Texturieren der Lebensmittelzusammensetzung, aufweisend
-- ein erstes Begrenzungselement (11) mit einer ersten Texturieroberfläche (15),
-- ein zweites Begrenzungselement (12; 12d) mit einer zweiten Texturieroberfläche (16; 16d),
-- einen zwischen der ersten Texturieroberfläche (15) und der zweiten Texturieroberfläche (16; 16d) gebildeten Spalt (17; 17d),
-- mindestens eine Zuführöffnung (10) zum kontinuierlichen Zuführen der Lebensmittelzusammensetzung in den Spalt (17; 17d), wobei mindestens eine Austrittsöffnung (8) der mindestens einen Aufbereitungsvorrichtung (2) mit der mindestens einen Zuführöffnung (10) der Austragsvorrichtung (3; 3d) verbunden ist, und
-- mindestens eine Austragsöffnung (18) zum kontinuierlichen Austragen der Lebensmittelzusammensetzung aus dem Spalt (17; 17d),
-- wobei das erste Begrenzungselement (11) und das zweite Begrenzungselement (12; 12d) relativ zueinander um eine Rotationsachse (R) drehantreibbar sind,
-- wobei sich die erste Texturieroberfläche (15) und die zweite Texturieroberfläche (16; 16d) jeweils zwischen der mindestens einen Zuführöffnung (10) und der mindestens einen Austragsöffnung (18) radial zur Rotationsachse (R) erstrecken, und
-- die mindestens eine Austragsöffnung (18) einen größeren Abstand zu der Rotationsachse (R) hat als die mindestens eine Zuführöffnung (10),
**dadurch gekennzeichnet,**
**dass** die mindestens eine Austragsöffnung (18) zum Austragen der Lebensmittelzusammensetzung in Richtung radial zu der Rotationsachse (R) ausgebildet ist.

2. Anlage nach Anspruch 1, **dadurch gekennzeichnet,**
**dass** die erste Texturieroberfläche (15) und/oder die zweite Texturieroberfläche (16; 16d) unter einem Winkel b zu der Rotationsachse (R) verlaufen, wobei gilt 45° ≤ b ≤ 90°, insbesondere 60° ≤ b ≤ 90°, insbesondere 75° ≤ b ≤ 90°, insbesondere 80° ≤ b ≤ 90°, insbesondere 85° ≤ b ≤ 90°, insbesondere 87° ≤ b ≤ 90°.

3. Anlage nach mindestens einem der Ansprüche 1 oder 2, **dadurch gekennzeichnet,**
**dass** die erste Texturieroberfläche (15) und die zweite Texturieroberfläche (16) parallel verlaufen.

4. Anlage nach mindestens einem der Ansprüche 1 bis 3, **dadurch gekennzeichnet,**
**dass** sich ein Spaltmaß (t) des Spaltes (17d) abhängig von einem Abstand zu der Rotationsachse (R) ändert, insbesondere mit zunehmenden Abstand zu der Rotationsachse (R) erhöht.

5. Anlage nach mindestens einem der Ansprüche 1 bis 4, **dadurch gekennzeichnet,**
**dass** die mindestens eine Austragsöffnung (18) zum Austragen der Lebensmittelzusammensetzung umfangseitig zwischen dem ersten Begrenzungselement (11) und dem zweiten Begrenzungselement (12; 12d) ausgebildet ist.

6. Anlage nach mindestens einem der Ansprüche 1 bis 5, **gekennzeichnet durch**
mindestens eine Abstreifvorrichtung (25) im Bereich der mindestens einen Austragsöffnung (18).

7. Anlage nach mindestens einem der Ansprüche 1 bis 6, **gekennzeichnet durch**
mindestens ein im Spalt (17; 17d) angeordnetes Texturierwerkzeug (21; 23), wobei insbesondere das mindestens eine Texturierwerkzeug (21; 23) lösbar an dem ersten Begrenzungselement (11) und/oder an dem zweiten Begrenzungselement (12; 12d) angeordnet ist.

8. Anlage nach mindestens einem der Ansprüche 1 bis 7, **gekennzeichnet durch**
eine Temperiereinheit (28) zum Temperieren des ersten Begrenzungselements (11) und/oder des zweiten Begrenzungselements (12; 12d).

9. Anlage nach Anspruch 8, **dadurch gekennzeichnet,**
**dass** die Temperiereinheit (28) zur unterschiedlichen Temperierung unterschiedlicher Temperier-Teilbereiche (T1, T2) der ersten Texturieroberfläche (15) und/oder der zweiten Texturieroberfläche (16; 16d), insbesondere zur Temperierung der ersten Texturieroberfläche (15) und/oder der zweiten Texturieroberfläche (16; 16d) in Abhängigkeit von einem Abstand zu der Rotationsachse (R), ausgebildet ist.

10. Anlage nach mindestens einem der Ansprüche 1 bis 9, **dadurch gekennzeichnet,**
**dass** die erste Texturieroberfläche (15) und/oder die zweite Texturieroberfläche (16; 16d) eine Oberflächenprofilierung aufweisen, insbesondere eine Riffelung.

11. Anlage nach mindestens einem der Ansprüche 1 bis 10, **gekennzeichnet durch**
mindestens eine Zuführleitung (9) zum kontinuierlichen Zuführen der Lebensmittelzusammensetzung zu der mindestens einen Zuführöffnung (10).

12. Anlage nach mindestens einem der Ansprüche 1 bis 11, **gekennzeichnet durch,**
mindestens eine zusätzliche Zugangsöffnung (26) für die Beimischung weiterer Zutaten und/oder zur Überwachung der Lebensmittelzusammensetzung.

13. Verfahren zur Herstellung einer Lebensmittelzusammensetzung, insbesondere einer Fleischersatz-Zusammensetzung, mit den Schritten
- Bereitstellen einer Anlage (1) nach mindestens einem der Ansprüche 1 bis 12,
- kontinuierliches Aufbereiten einer zu texturierenden Lebensmittelzusammensetzung mithilfe der mindestens einen Aufbereitungsvorrichtung (2),
- kontinuierliches Zuführen der zu texturierenden Lebensmittelzusammensetzung in den Spalt (17; 17d) der Austragsvorrichtung (3) über die mindestens eine Zuführöffnung (10),
- Drehantreiben des ersten Begrenzungselements (11) und des zweiten Begrenzungselements (12; 12d) relativ zueinander zur Erzeugung von Scherkräften auf die im Spalt (1; 17d 7) befindliche Lebensmittelzusammensetzung zu deren Texturierung,
- kontinuierliches Austragen der texturierten Lebensmittelzusammensetzung über die mindestens eine Austragsöffnung (18).

## Claims

1. Facility for the production of a food composition, in particular a meat substitute composition, comprising
- at least one preparation apparatus (2) for continuously preparing the food composition and
- a discharge apparatus (3; 3d) for texturing the food composition, comprising
-- a first boundary member (11) having a first texturing surface (15),
-- a second boundary member (12; 12d) having a second texturing surface (16; 16d)
-- a gap (17; 17d) formed between the first texturing surface (15) and the second texturing surface (16; 16d),
-- at least one feed opening (10) for continuously feeding the food composition into the gap (17; 17d), wherein at least one outlet opening (8) of the at least one preparation apparatus (2) is connected to the at least one feed opening (10) of the discharge apparatus (3; 3d), and
-- at least one discharge opening (18) for continuously discharging the food composition from the gap (17; 17d),
-- wherein the first boundary member (11) and the second boundary member (12; 12d) are rotatably drivable relative to each other about an axis of rotation (R),
-- wherein the first texturing surface (15) and the second texturing surface (16; 16d) each extend radially to the axis of rotation (R) between the at least one feed opening (10) and the at least one discharge opening (18), and
-- the at least one discharge opening (18) has a greater distance to the axis of rotation (R) than the at least one feed opening (10),
**characterized in**
**that** the at least one discharge opening (18) is formed for discharging the food composition in the direction radial to the axis of rotation (R).

2. Facility according to claim 1, **characterized in**
**that** the first texturing surface (15) and/or the second texturing surface (16; 16d) extend at an angle b to the axis of rotation (R), wherein 45° ≤ b ≤ 90°, in particular 60° ≤ b ≤ 90°, in particular 75° ≤ b ≤ 90°, in particular 80° ≤ b ≤ 90°, in particular 85° ≤ b ≤ 90°, in particular 87° ≤ b ≤ 90°.

3. Facility according to at least one of claims 1 or 2, **characterized in that** the first texturing surface (15) and the second texturing surface (16) run parallel to one another.

4. Facility according to at least one of claims 1 to 3, **characterized in that** a gap dimension (t) of the gap (17d) changes depending on a distance to the axis of rotation (R), in particular increases with growing distance to the axis of rotation (R).

5. Facility according to at least one of claims 1 to 4, **characterized in that** the at least one discharge opening (18) is formed for discharging the food composition circumferentially between the first boundary member (11) and the second boundary member (12; 12d).

6. Facility according to at least one of claims 1 to 5, **characterized by** at least one wiper device (25) in the region of the at least one discharge opening (18).

7. Facility according to at least one of claims 1 to 6, **characterized by** at least one texturing tool (21; 23) arranged in the gap (17; 17d), wherein in particular the at least one texturing tool (21; 23) is detachably arranged at the first boundary member (11) and/or at the second boundary member (12; 12d).

8. Facility according to at least one of claims 1 to 7, **characterized by** a temperature control unit (28) for temperature control of the first boundary member (11) and/or the second boundary member (12; 12d).

9. Facility according to claim 8, **characterized in**
**that** the temperature control unit (28) is designed for different temperature control of different temperature control subregions (T1, T2) of the first texturing surface (15) and/or of the second texturing surface (16; 16d), in particular for temperature control of the first texturing surface (15) and/or of the second texturing surface (16; 16d) in dependence on a distance from the axis of rotation (R).

10. Facility according to at least one of claims 1 to 9, **characterized in that** the first texturing surface (15) and/or the second texturing surface (16; 16d) have a surface profiling, in particular a corrugation.

11. Facility according to at least one of claims 1 to 10, **characterized by** at least one supply line (9) for continuously supplying the food composition to the at least one feed opening (10).

12. Facility according to at least one of claims 1 to 11, **characterized by** at least one additional access opening (26) for the admixture of further ingredients and/or for monitoring the food composition.

13. A method for the production of a food composition, in particular a meat substitute composition, comprising the steps of
- providing a facility (1) according to at least one of claims 1 to 12,
- continuously preparing a food composition to be textured using the at least one preparation apparatus (2),
- continuously feeding the food composition to be textured into the gap (17; 17d) of the discharge apparatus (3) via the at least one feed opening (10),
- rotationally driving the first boundary member (11) and the second boundary member (12; 12d) relative to each other to produce shear forces on the food composition located in the gap (17; 17d) to texture it,
- continuously discharging the textured food composition via the at least one discharge opening (18).

## Revendications

1. Installation de production d'une composition alimentaire, en particulier une composition de succédané de viande, comportant
- au moins un dispositif de préparation (2) pour préparer en continu la composition alimentaire, et
- un dispositif de déchargement (3 ; 3d) pour texturer la composition alimentaire, comportant
-- un premier élément de délimitation (11) avec une première surface de texturation (15),
-- un second élément de délimitation (12 ; 12d) avec une seconde surface de texturation (16 ; 16d),
-- un espace (17 ; 17d) formé entre la première surface de texturation (15) et la seconde surface de texturation (16 ; 16d),
-- au moins un orifice d'amenée (10) pour amener en continu la composition alimentaire dans l'espace (17 ; 17d), au moins un orifice de sortie (8) dudit au moins un dispositif de préparation (2) étant relié audit au moins un orifice d'amenée (10) du dispositif de déchargement (3 ; 3d), et
-- au moins un orifice de déchargement (18) pour décharger en continu la composition alimentaire de l'espace (17 ; 17d),
-- dans laquelle le premier élément de délimitation (11) et le second élément de délimitation (12 ; 12d) peuvent être entraînés en rotation l'un par rapport à l'autre autour d'un axe de rotation (R),
-- dans laquelle la première surface de texturation (15) et la seconde surface de texturation (16 ; 16d) s'étendent respectivement entre ledit au moins un orifice d'amenée (10) et ledit au moins un orifice de déchargement (18), radialement par rapport à l'axe de rotation (R), et
-- ledit au moins un orifice de déchargement (18) a une plus grande distance par rapport à l'axe de rotation (R) que ledit au moins un orifice d'amenée (10),
**caractérisée en ce**
**que** ledit au moins un orifice de déchargement (18) est configuré pour décharger la composition alimentaire dans une direction radiale par rapport à l'axe de rotation (R).

2. Installation selon la revendication 1, **caractérisée en ce**
**que** la première surface de texturation (15) et/ou la seconde surface de texturation (16 ; 16d) s'étendent à un angle b par rapport à l'axe de rotation (R), dans laquelle 45° ≤ b ≤ 90°, en particulier 60° ≤ b ≤ 90°, en particulier 75° ≤ b ≤ 90°, en particulier 80° ≤ b ≤ 90°, en particulier 85° ≤ b ≤ 90°, en particulier 87° ≤ b ≤ 90°.

3. Installation selon au moins une des revendications 1 ou 2, **caractérisée en ce que** la première surface de texturation (15) et la seconde surface de texturation (16) s'étendent de façon parallèle.

4. Installation selon au moins une des revendications 1 à 3, **caractérisée en ce qu'**une dimension d'espace (t) de l'espace (17d) varie en fonction d'une distance par rapport à l'axe de rotation (R), en particulier s'accroit avec une distance croissante par rapport à l'axe de rotation (R).

5. Installation selon au moins une des revendications 1 à 4, **caractérisée en ce que** ledit au moins un orifice de déchargement (18) pour décharger la composition alimentaire est formé de manière circonférentielle entre le premier élément de délimitation (11) et le second élément de délimitation (12 ; 12d).

6. Installation selon au moins une des revendications 1 à 5, **caractérisée par** au moins un dispositif d'enlèvement (25) dans la zone dudit au moins un orifice de déchargement (18).

7. Installation selon au moins une des revendications 1 à 6, **caractérisée par au** moins un outil de texturation (21 ; 23) agencé dans l'espace (17 ; 17d), dans laquelle ledit au moins un outil de texturation (21 ; 23) est en particulier agencé de manière détachable sur ledit au moins un premier élément de délimitation (11) et/ou sur le second élément de délimitation (12 ; 12d).

8. Installation selon au moins une des revendications 1 à 7, **caractérisée par** une unité de conditionnement thermique (28) pour conditionner la température du premier élément de délimitation (11) et/ou du second élément de délimitation (12 ; 12d).

9. Installation selon la revendication 8, **caractérisée en ce**
**que** l'unité de conditionnement thermique (28) est conçue pour conditionner différentes températures de différentes sous-zones de conditionnement thermique (T1, T2) de la première surface de texturation (15) et/ou de la seconde surface de texturation (16 ; 16d), en particulier pour conditionner la température de la première surface de texturation (15) et/ou de la seconde surface de texturation (16 ; 16d) en fonction d'une distance par rapport à l'axe de rotation (R).

10. Installation selon au moins une des revendications 1 à 9, **caractérisée en ce que** la première surface de texturation (15) et/ou la seconde surface de texturation (16 ; 16d) présentent un profil de surface, en particulier une ondulation.

11. Installation selon au moins une des revendications 1 à 10, **caractérisée par** au moins une ligne d'amenée (9) pour amener en continu la composition alimentaire audit au moins un orifice d'amenée (10).

12. Installation selon au moins une des revendications 1 à 11, **caractérisée par** au moins un orifice d'accès supplémentaire (26) pour apporter d'autres ingrédients et/ou pour surveiller la composition alimentaire.

13. Procédé pour produire une composition alimentaire, en particulier une composition de succédané de viande, comprenant les étapes consistant à :
- fournir une installation (1) selon au moins une des revendications 1 à 12,
- préparer en continu une composition alimentaire à texturer à l'aide dudit au moins un dispositif de préparation (2),
- amener en continu la composition alimentaire à texturer dans l'espace (17 ; 17d) du dispositif de déchargement (3) par ledit au moins un orifice d'amenée (10),
- entraîner en rotation le premier élément de délimitation (11) et le second élément de délimitation (12 ; 12d) l'un par rapport à l'autre afin de générer des forces de cisaillement sur la composition alimentaire contenue dans l'espace (1 ; 17d) en vue de la texturer,
- décharger en continu la composition alimentaire texturée par ledit au moins un orifice de déchargement (18).
